# EUROPÄISCHE PATENTSCHRIFT

(11) **EP 3 414 136 B1**
(45) Veröffentlichungstag und Bekanntmachung des Hinweises auf die Patenterteilung: **25.03.2020**
(21) Anmeldenummer: 16820302.4
(22) Anmeldetag: 29.12.2016
(51) Int. Cl.: B60T 8/36

(54) **HYDRAULIKBLOCK FÜR EIN BREMSSYSTEM EINES KRAFTFAHRZEUGS UND BREMSSYSTEM FÜR EIN KRAFTFAHRZEUG**
HYDRAULIC BLOCK FOR A BRAKE SYSTEM OF A MOTOR VEHICLE, AND BRAKE SYSTEM FOR A MOTOR VEHICLE
BLOC HYDRAULIQUE POUR SYSTÈME DE FREINAGE D'UN VÉHICULE AUTOMOBILE ET SYSTÈME DE FREINAGE D'UN VÉHICULE AUTOMOBILE

(30) Priorität: 12.02.2016 DE 102016202113
(43) Veröffentlichungstag der Anmeldung: 19.12.2018
(73) Patentinhaber: Robert Bosch GmbH, 70442 Stuttgart (DE)
(72) Erfinder: TANDLER, Juergen, 87629 Fuessen (DE); MAYR, Matthias, 87549 Rettenberg (DE); WEH, Andreas, 87477 Sulzberg (DE)
(86) Internationale Anmeldenummer: PCT/EP2016/082799
(87) Internationale Veröffentlichungsnummer: WO 2017/137135

(56) Entgegenhaltungen:
- EP-A1- 2 883 766
- WO-A1-2013/023953
- WO-A1-2014/090455
- DE-A1-102014 213 732
- DE-A1-102014 225 595

## Beschreibung

Die Erfindung betrifft einen Hydraulikblock für ein Bremssystem eines Kraftfahrzeugs. Ebenso betrifft die Erfindung ein Bremssystem für ein Kraftfahrzeug.

### Stand der Technik

Aus dem Stand der Technik sind Bremssysteme bekannt, welche zusätzlich zu einem Hauptbremszylinder noch eine motorisierte Plungervorrichtung aufweisen. Beispielsweise beschreibt die DE 10 2014 208 884 A1 ein Bremssystem für ein Fahrzeug, bei welchem alle Radbremszylinder des Bremssystems nicht nur mit dessen Hauptbremszylinder hydraulisch verbunden sind, sondern auch an einer motorisierten Plungervorrichtung angebunden sind. Durch ein Verstellen eines Kolbens innerhalb eines Volumens der motorisierten Plungervorrichtung soll jeweils ein Druck in den Radbremszylindern variierbar sein. Auf diese Weise soll eine autonome Bremsung ausführbar und/oder ein Generator-Bremsmoment eines zusätzlich zu dem Bremssystem zum Abbremsen des Fahrzeugs eingesetzten Generators verblendbar sein.

Hydraulikblöcke für derartige Bremssysteme, welche zusätzlich zu einem Hauptbremszylinder noch eine motorisierte Plungervorrichtung aufweisen, sind beispielsweise in der WO 2013/023953 A1, der DE 10 2014 213 732 A1, der WO 2014/090455 A1, der EP 2 883 766 A1 und in der spät veröffentlichten DE 10 2014 225 595 A1 beschrieben.

### Offenbarung der Erfindung

Die Erfindung schafft einen Hydraulikblock für ein Bremssystem eines Kraftfahrzeugs mit den Merkmalen des Anspruchs 1 und ein Bremssystem für ein Kraftfahrzeug mit den Merkmalen des Anspruchs 13.

### Vorteile der Erfindung

Die vorliegende Erfindung schafft eine optimierte Anordnung von Bremssystemkomponenten in Hinblick auf Materialkosten, ein Gewicht und eines Bauraumbedarfs des den erfindungsgemäßen Hydraulikblock aufweisenden Bremssystems. Insbesondere ist mittels der vorliegenden Erfindung ein 9-lnch Packaging realisierbar, bei welchem (nahezu) alle Bremssystemkomponenten innerhalb eines Kreises mit einem Radius von 9 Inch um die Hauptbremszylinderaufnahmebohrung liegen (9^{∗}2,54 cm = 22,86 cm). Bei einem derartigen Packaging ist das realisierte Bremssystem einfach und platzsparend an einer Vielzahl von Kraftfahrzeugtypen verbaubar. Außerdem schafft die Erfindung je eine flache Schnittstelle an der Motorseite und an der Gegenseite/Steuervorrichtungsseite.

Die optimierte Anordnung der Bremssystemkomponenten wird dadurch erreicht, dass die sich von der Motorseite zu der (von der Motorseite weg gerichteten) Gegenseite erstreckende Plungeraufnahmebohrung den Hydraulikblock vollständig durchdringt. Somit ist genügend Anbring- und Verstellvolumen für den mindestens einen Kolben der motorisierten Plungervorrichtung innerhalb der Plungeraufnahmebohrung vorhanden. Der elektrische Motor der motorisierten Plungervorrichtung zum Verstellen des mindestens einen Kolbens kann direkt an der Motorseite des Hydraulikblocks befestigt werden. Ein Polgehäuse des elektrischen Motors ummantelt damit vorteilhafterweise eine Pungergetriebeeinheit der motorisierten Plungervorrichtung (Schutz gegen Korrosion). Die realisierbare direkte Anbindung des elektrischen Motors an der Motorseite des Hydraulikblocks trägt zur kompakteren Anordnung der Bremssystemkomponenten bei. Zusätzlich kann eine Steuervorrichtung an der von der Motorseite weg gerichteten Gegenseite/Steuervorrichtungsseite des Hydraulikblocks direkt angebunden werden. Ein Durchdringen der Steuervorrichtung (bzw. der als Steuervorrichtung eingesetzten Leiterplatte) von der Plungeraufnahmebohrung ist nicht notwendig. Da somit ausreichend Fläche an der Gegenseite/Steuervorrichtungsseite des Hydraulikblocks für die Steuervorrichtung zur Verfügung steht, kann eine noch kompaktere Anordnung der Bremssystemkomponenten geschaffen werden.

Zusätzlich ist auch eine platzsparende Anordnung des mindestens einen elektrisch ansteuerbaren Ventils des Bremssystems möglich. Außerdem erleichtert die hier beschriebene Anordnung des mindestens einen elektrisch ansteuerbaren Ventils des Bremssystems in der mindestens einen an der Gegenseite ausgebildeten Ventilaufnahmebohrung ein Steuern/Schalten des jeweiligen Ventils mittels der platzsparend angeordneten Steuervorrichtung. Wie unten genauer ausgeführt wird, ist die hier beschriebene Anordnung der Radauslassventile und der Radeinlassventile besonders platzsparend.

Gemäß vorliegender Erfindung ist in dem Hydraulikblock eine Simulatoraufnahmebohrung ausgebildet, welche sich von einer Unterseite des Hydraulikblocks in Richtung zu einer von der Unterseite weg gerichteten Oberseite des Hydraulikblocks erstreckt, wobei die Simulatoraufnahmebohrung derart ausgebildet und mit der Hauptbremszylinderaufnahmebohrung so verbunden ist, dass ein Simulator des Bremssystems zumindest teilweise in der Simulatoraufnahmebohrung ausbildbar ist. Die vorliegende Erfindung trägt somit auch zur Ausstattung eines Bremssystems mit einem Simulator (zusätzlich zu dem Hauptbremszylinder und der motorisierten Plungervorrichtung) bei, ohne dass dazu ein Gewicht und/oder ein Bauraumbedarf des realisierten Bremssystems wesentlich gesteigert werden. Durch die Ausbildung der Simulatoraufnahmebohrung an der Unterseite steigert die zusätzliche Ausstattung des Bremssystems mit dem Simulator auch nicht die zum Ausbilden des Hydraulikblocks notwendige Materialmenge.

Vorzugsweise erstreckt sich die Hauptbremszylinderaufnahmebohrung entlang einer ersten Mittellängsachse von der Pedalseite in Richtung zu der Rückseite, die Plungeraufnahmebohrung erstreckt sich entlang einer zweiten Mittellängsachse senkrecht zu der ersten Mittellängsachse von der Motorseite zu der Gegenseite des Hydraulikblocks, und die Simulatoraufnahmebohrung kann sich entlang einer dritten Mittellängsachse senkrecht zu der zweiten Mittellängsachse und der ersten Mittellängsachse von der Unterseite in Richtung zu der Oberseite erstrecken. Die senkrechte Ausrichtung der Hauptbremszylinderaufnahmebohrung, der Plungeraufnahmebohrung und der Simulatoraufnahmebohrung zueinander führt zu einem noch kompakteren Packaging der verschiedenen Bremssystemkomponenten.

Außerdem kann in der Gegenseite zusätzlich eine Linearpositionssensor-Aufnahmeöffnung derart ausgebildet sein, dass ein Linearpositionssensor des Bremssystems in der Linearpositionssensor-Aufnahmeöffnung anordbar ist, welcher bei dem Betrieb des Bremssystems mindestens ein Linearpositionssignal an die Steuervorrichtung ausgibt, wobei die Linearpositionssensor-Aufnahmeöffnung zwischen der ersten Reihe der vier Radauslassventil-Aufnahmebohrungen und der dritten Kante der Gegenseite ausgebildet ist. Die hier beschriebene Anordnung der Linearpositionssensor-Aufnahmeöffnung zwischen den vier Radauslassventil-Aufnahmebohrungen und der dritten Kante der Gegenseite an der Oberseite des Hydraulikblocks ermöglicht eine zusätzliche Ausbildung von mindestens einer weiteren Aufnahmebohrung in der Oberseite des Hydraulikblocks, welche beispielsweise zum Einsetzen mindestens eines Rückschlagventils genutzt werden kann.

Zusätzlich kann in der Gegenseite mindestens eine Drucksensor-Aufnahmeöffnung derart ausgebildet sein, dass mindestens ein Drucksensor des Bremssystems in der mindestens einen Drucksensor-Aufnahmeöffnung anordbar ist, welcher jeweils bei dem Betrieb des Bremssystems mindestens ein Drucksignal an die Steuervorrichtung ausgibt, wobei die mindestens eine Drucksensor-Aufnahmeöffnung zwischen der ersten Reihe der vier Radauslassventil-Aufnahmebohrungen und der zweiten Reihe der vier Radeinlassventil-Aufnahmebohrungen ausgebildet ist. Die mindestens eine zum Anordnen des mindestens einen Drucksensors geeignete Drucksensor-Aufnahmeöffnung kann mit einer geringeren Tiefe als die Radauslassventil-Aufnahmebohrungen und die Radeinlassventil-Aufnahmebohrungen ausgebildet werden. Deshalb schafft die hier beschriebene Anordnung der mindestens einen Drucksensor-Aufnahmeöffnung zwischen den vier Radauslassventil-Aufnahmebohrungen und den vier Radeinlassventil-Aufnahmebohrungen die Möglichkeit, die Hauptbremszylinderaufnahmebohrung platzsparend auf Höhe der mindestens einen Drucksensor-Aufnahmeöffnung auszubilden.

Des Weiteren kann die Plungeraufnahmebohrung auf der Gegenseite zwischen der zweiten Reihe der vier Radeinlassventil-Aufnahmebohrungen und einer an der Unterseite des Hydraulikblocks angrenzenden vierten Kante der Gegenseite liegen. Die vergleichsweise großvolumige Hauptbremszylinderaufnahmebohrung und die ebenfalls vergleichsweise großvolumige Plungeraufnahmebohrung können somit platzsparend bereits in einem vergleichsweise kleinen Hydraulikblock ausgebildet werden.

In einer weiteren vorteilhaften Ausführungsform sind in der Gegenseite zusätzlich eine erste Trennventil-Aufnahmeöffnung und eine erste Plungerabkopplungsventil-Aufnahmeöffnung als die mindestens eine Ventilaufnahmebohrung derart ausgebildet, dass ein erstes Trennventil des Bremssystems in der ersten Trennventil-Aufnahmeöffnung und ein erstes Plungerabkopplungsventil des Bremssystems in der ersten Plungerabkopplungsventil-Aufnahmeöffnung anordbar sind, wobei bei dem Betrieb des Bremssystems ein Bremsflüssigkeitspfad durch den Hydraulikblock von der Hauptbremszylinderaufnahmebohrung zu einer ersten Radeinlassventil-Aufnahmebohrung und einer zweiten Radeinlassventil-Aufnahmebohrung der vier Radeinlassventil-Aufnahmebohrungen mittels des ersten Trennventils schließbar ist und ein Bremsflüssigkeitspfad durch den Hydraulikblock von der Plungeraufnahmebohrung zu der ersten Radeinlassventil-Aufnahmebohrung und der zweiten Radeinlassventil-Aufnahmebohrung mittels des ersten Plungerabkopplungsventils schließbar ist, und wobei die erste Trennventil-Aufnahmeöffnung und die erste Plungerabkopplungsventil-Aufnahmeöffnung zwischen der ersten Kante der Gegenseite und der Plungeraufnahmebohrung in der Gegenseite ausgebildet sind. Eine zusätzliche Ausstattung des mittels dieser Ausführungsform des Hydraulikblocks realisierten Bremssystems mit dem ersten Trennventil und dem ersten Plungerabkopplungsventil ist somit ohne eine (signifikante) Steigerung eines Bauraumbedarfs des Hydraulikblocks möglich.

Ebenso können in der Gegenseite zusätzlich eine zweite Trennventil-Aufnahmeöffnung und eine zweite Plungerabkopplungsventil-Aufnahmeöffnung als die mindestens eine Ventilaufnahmebohrung derart ausgebildet sein, dass ein zweites Trennventil des Bremssystems in der zweiten Trennventil-Aufnahmeöffnung und ein zweites Plungerabkopplungsventil des Bremssystems in der zweiten Plungerabkopplungsventil-Aufnahmeöffnung anordbar sind, wobei bei dem Betrieb des Bremssystems ein Bremsflüssigkeitspfad durch den Hydraulikblock von der Hauptbremszylinderaufnahmebohrung zu einer dritten Radeinlassventil-Aufnahmebohrung und einer vierten Radeinlassventil-Aufnahmebohrung der vier Radeinlassventil-Aufnahmebohrungen mittels des zweiten Trennventils schließbar ist und ein Bremsflüssigkeitspfad durch den Hydraulikblock von der Plungeraufnahmebohrung zu der dritten Radeinlassventil-Aufnahmebohrung und der vierten Radeinlassventil-Aufnahmebohrung mittels des zweiten Plungerabkopplungsventils schließbar ist, und wobei die zweite Trennventil-Aufnahmeöffnung und die zweite Plungerabkopplungsventil-Aufnahmeöffnung zwischen der zweiten Kante der Gegenseite und der Plungeraufnahmebohrung in der Gegenseite ausgebildet sind. Auch dies ist eine platzsparende Anordnung zur zusätzlichen Ausstattung eines mittels dieser Ausführungsform des Hydraulikblocks realisierten Bremssystems mit dem zweiten Trennventil und dem zweiten Plungerabkopplungsventil.

Insbesondere kann in der Gegenseite zusätzlich eine Simulatorventil-Aufnahmeöffnung als die mindestens eine Ventilaufnahmebohrung derart ausgebildet sein, dass ein Simulatorventil des Bremssystems in der Simulatorventil-Aufnahmeöffnung anordbar ist, wobei bei dem Betrieb des Bremssystems ein Bremsflüssigkeitspfad durch den Hydraulikblock von der Hauptbremszylinderaufnahmebohrung zu der Simulatoraufnahmebohrung mittels des Simulatorventils schließbar ist, und wobei die Simulatorventil-Aufnahmeöffnung zwischen der zweiten Kante der Gegenseite und der Plungeraufnahmebohrung in der Gegenseite ausgebildet ist. Auch dies gewährleistet die optimierte Kompaktheit selbst bei einer Vielzahl von Bremssystemkomponenten.

Vorzugsweise verläuft ein an die Simulatorventil-Aufnahmeöffnung angrenzender Teil eines von der Hauptbremszylinderaufnahmebohrung zu der Simulatorventil-Aufnahmeöffnung verlaufender Abschnitt des von der Hauptbremszylinderaufnahmebohrung zu der Simulatoraufnahmebohrung verlaufenden Bremsflüssigkeitspfads entlang einer um einen Winkel zwischen 10° und 80° zu der Gegenseite geneigten Achse. Dies erlaubt ein druckunterstütztes Schließen des Simulatorventils zum Abdichten einer hydraulischen Verbindung zwischen dem Hauptbremszylinder und dem Simulator. Auf diese Weise ist gewährleistbar, dass selbst bei einem Bordnetzausfall die hydraulische Verbindung zwischen dem Hauptbremszylinder und dem Simulator mittels des Simulatorventils verlässlich abgedichtet wird, weshalb kein unerwünschtes Einbremsen in den Simulator in einer derartigen Situation in Kauf genommen werden muss.

In einer weiteren vorteilhaften Ausführungsform ist in der Gegenseite eine Rotationssensor-Aufnahmeöffnung derart ausgebildet, dass ein Rotationssensor des Bremssystems in der Rotationssensor-Aufnahmeöffnung anordbar ist, welcher bei dem Betrieb des Bremssystems mindestens ein Rotationspositionssignal an die Steuervorrichtung ausgibt, wobei die Rotationssensor-Aufnahmeöffnung zwischen der vierten Kante der Gegenseite und der Plungeraufnahmebohrung in der Gegenseite ausgebildet ist. Ebenso kann in der Gegenseite mindestens eine Kontaktaufnahmeöffnung derart ausgebildet sein, dass mindestens ein Kontakt des Bremssystems in der mindestens einen Kontaktaufnahmeöffnung anordbar ist, an welchem jeweils bei dem Betrieb des Bremssystems mittels der Steuervorrichtung ein Spannungs- und/oder Stromsignal ausgebbar, anlegbar und/oder abgreifbar ist, wobei die mindestens eine Kontaktaufnahmeöffnung zwischen der vierten Kante der Gegenseite und der Plungeraufnahmebohrung in der Gegenseite ausgebildet ist. Beide Möglichkeiten erlauben das Ausstatten des Bremssystems mit dem Rotationssensor und/oder dem mindestens einen Kontakt auf platzsparende Weise.

Vorzugsweise ist die Gegenseite überfräßt, während die Motorseite, die Unterseite und/oder die Oberseite nicht überfräßt sind. Der Arbeitsaufwand zum Überfräsen der Motorseite, der Unterseite und/oder der Oberseite kann somit eingespart werden.

Die vorausgehend beschriebenen Vorteile sind auch bei einem Bremssystem für ein Kraftfahrzeug mit einem derartigen Hydraulikblock geschaffen. Es wird darauf hingewiesen, dass das Bremssystem gemäß den oben beschriebenen Ausführungsformen des Hydraulikblocks weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1j: schematische Gesamt- und Teildarstellungen einer ersten Ausführungsform des Hydraulikblocks, bzw. eines damit ausgestatteten Bremssystems; und
- Fig. 2a und 2b: schematische Gesamtdarstellungen einer zweiten Ausführungsform des Hydraulikblocks, bzw. des damit ausgestatteten Bremssystems.

### Ausführungsformen der Erfindung

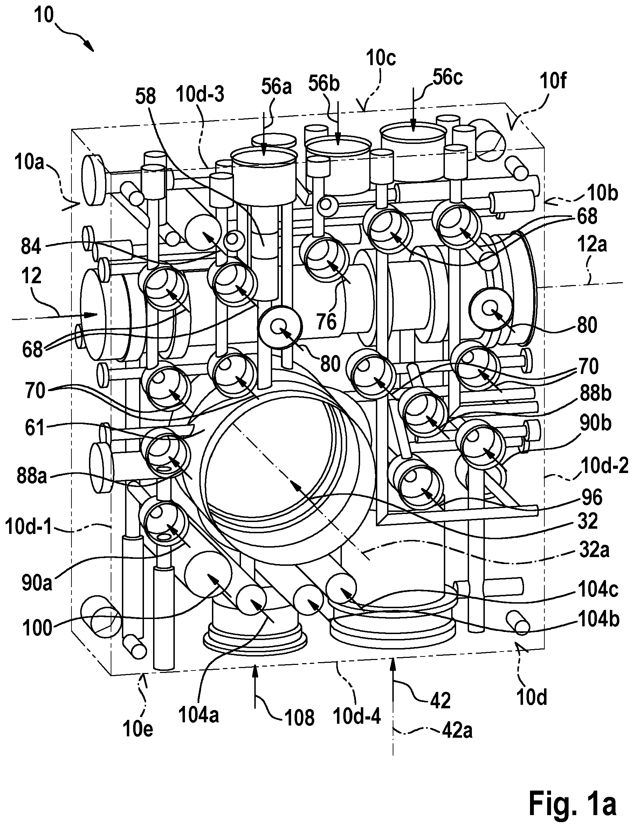

Fig. 1a bis 1j zeigen schematische Gesamt- und Teildarstellungen einer ersten Ausführungsform des Hydraulikblocks, bzw. eines damit ausgestatteten Bremssystems.

Der in Fig. 1a bis 1j schematisch dargestellte Hydraulikblock 10 ist zur Ausbildung einer Vielzahl von Bremssystemkomponenten eines Bremssystems eines Kraftfahrzeugs verwendbar. Der Hydraulikblock 10 eignet sich besonders für ein Bremssystem eines Elektro- oder Hybridfahrzeugs (beispielsweise zum Verblenden eines Generator-Bremsmoments beim Abbremsen mittels eines Generators). Es wird allerdings darauf hingewiesen, dass eine Verwendbarkeit des Hydraulikblocks 10, bzw. des damit ausgestatteten Bremssystems, nicht auf einen bestimmten Kraftfahrzeugtyp limitiert ist. Der Hydraulikblock 10 kann in nahezu jedem Kraftfahrzeugtyp (z.B. zum autonomen Bremsen des Kraftfahrzeugs) vorteilhaft eingesetzt werden.

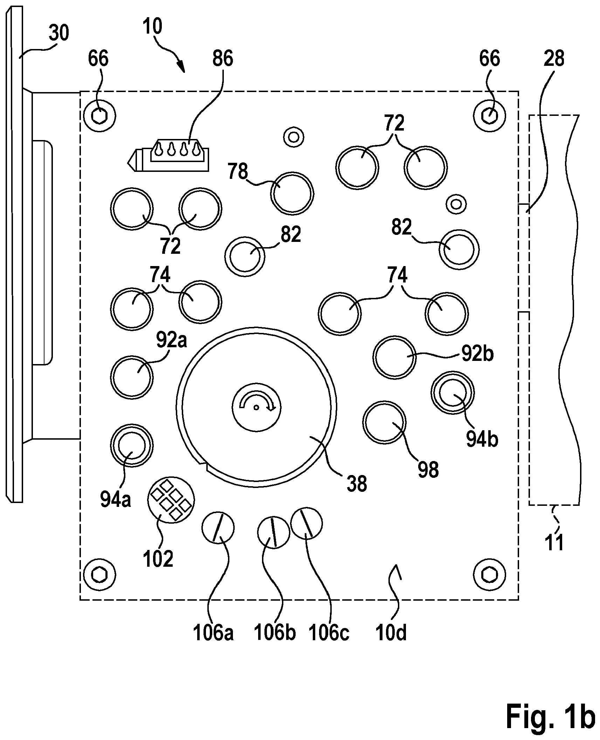

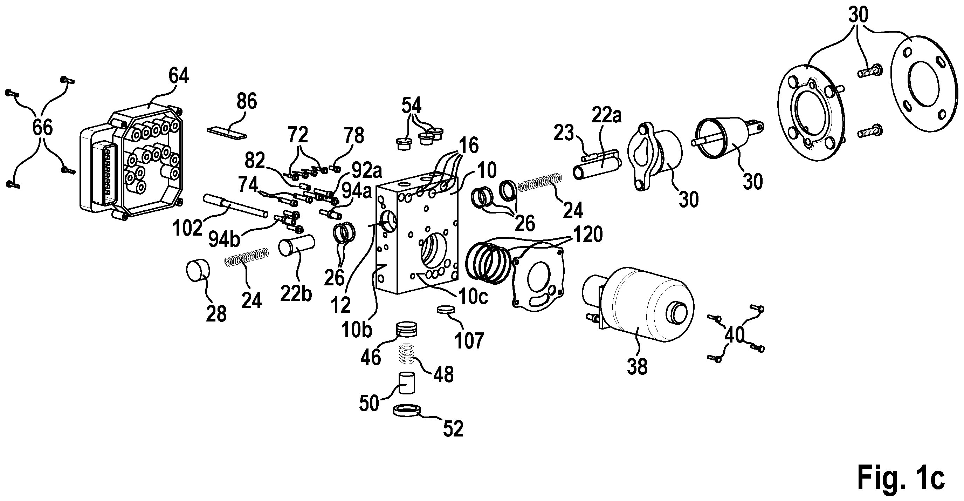

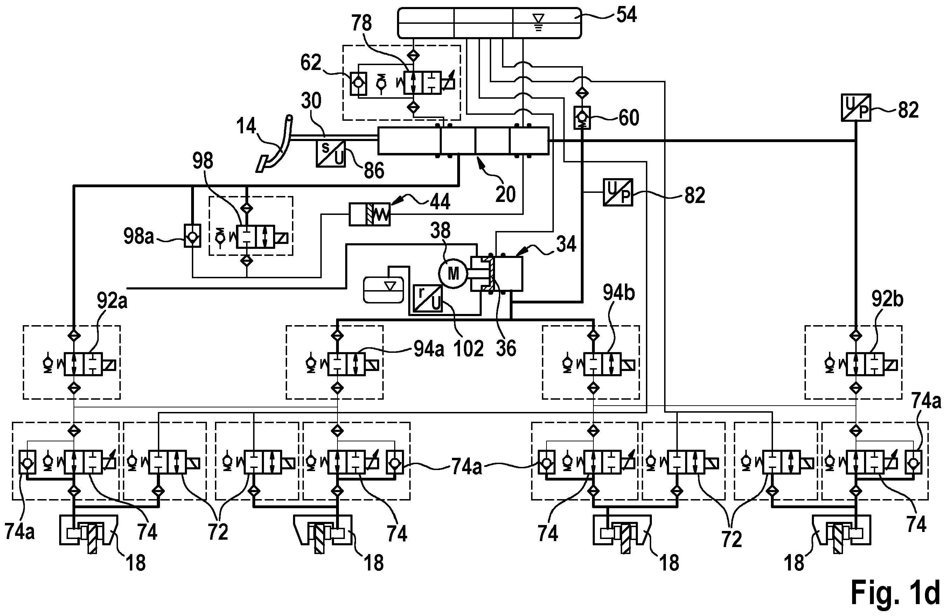

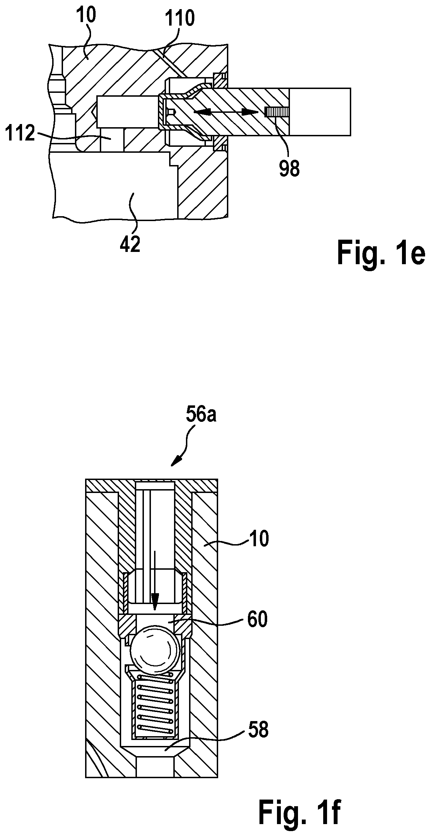

Fig. 1a zeigt eine Seitendarstellung des gesamten Hydraulikblocks 10. Fig. 1b und 1c zeigen eine Seitendarstellung des damit ausgebildeten Bremssystems nach dessen Montage an einer Spritzwand 11 eines Kraftfahrzeugs und ein Explosionsdiagramm des Bremssystems. In Fig. 1d ist ein schematischer Schaltplan des Bremssystems dargestellt. Fig. 1e bis 1j zeigen schematische Querschnitte von Teilen des mit dem Hydraulikblock 10 ausgestatteten Bremssystems.

Der Hydraulikblock 10 kann auch als ein Hydraulikaggregat bezeichnet werden. Der Hydraulikblock 10 kann mindestens ein Metall, wie beispielsweise Aluminium, und/oder mindestens einen Kunststoff umfassen. Der Hydraulikblock 10 kann insbesondere vollständig aus Aluminium gebildet sein. Anstelle oder als Ergänzung zu Aluminium kann jedoch auch mindestens ein anderes Material zum Bilden des Hydraulikblocks 10 verwendet werden.

Der Hydraulikblock 10 ist als quaderförmiger Block ausgebildet. In dem Hydraulikblock 10 ist eine Hauptbremszylinderaufnahmebohrung 12 ausgebildet, welche sich von einer Pedalseite 10a des Hydraulikblocks 10 in Richtung zu einer von der Pedalseite 10a weg gerichteten Rückseite 10b des Hydraulikblocks 10 erstreckt. (Unter der Pedalseite 10a des Hydraulikblocks 10 kann eine nach einer Montage des damit ausgebildeten Bremssystems zu einem Bremspedal 14 ausgerichtete Seite/Fläche des Hydraulikblocks 10 verstanden werden. An der Rückseite 10b kann der Hydraulikblock 10 z.B. an der Spritzwand 11 fixiert werden.) An dem Hydraulikblock 10 ist auch mindestens ein Radanschluss 16 (siehe Fig. 1c) ausgebildet, an welchem mindestens ein Radbremszylinder 18 des Bremssystems anbindbar ist. (Der mindestens eine Radanschluss 16 kann beispielsweise an einer unten genauer beschriebenen Motorseite 10c des Hydraulikblocks 10 ausgebildet sein.) Die Hauptbremszylinderaufnahmebohrung 12 ist derart ausgebildet und mit dem mindestens einen Radanschluss 16 so verbunden, dass ein Hauptbremszylinder 20 des Bremssystems zumindest teilweise in der Hauptbremszylinderaufnahmebohrung 12 ausbildbar ist. Der Hauptbremszylinder 20 ist in der Hauptbremszylinderaufnahmebohrung 12 so ausbildbar, dass mittels des Hauptbremszylinders 20 bei einem Betrieb des Bremssystems (mittels der auf mindestens einen Hauptbremszylinderkolben 22a und 22b des Hauptbremszylinders 20 ausgeübten Bremskraft) ein jeweiliger Druck in dem mindestens einen Radbremszylinder 18 steigerbar ist. Beispielsweise können, wie in Fig. 1c schematisch dargestellt ist, ein Primärkolben 22a (mit einer Magnetnadel 23), ein Sekundärkolben 22b, mindestens eine Rückstellfeder 24 und/oder mindestens ein Dichtring 26 in die Hauptbremszylinderaufnahmebohrung 12 einbringbar sein. Mittels einer Abdeckung 28 kann eine Öffnung der Hauptbremszylinderaufnahmebohrung 12 an der Rückseite 10b des Hydraulikblocks 10 verschließbar sein, während an einer Öffnung der Hauptbremszylinderaufnahmebohrung 12 an der Pedalseite 10a des Hydraulikblocks 10 Komponenten 30 für eine Pedalschnittstelle und zur Übertragung der auf das Bremspedal 14 ausgeübten Bremskraft auf den mindestens einen Hauptbremszylinderkolben 22a und 22b montierbar/befestigbar sind. Vorzugsweise ist parallel zu der Hauptbremszylinderaufnahmebohrung 12 noch eine weitere Aufnahmebohrung für die Magnetnadel 23 ausgebildet.

Der Hydraulikblock 10 weist auch eine darin ausgebildete Plungeraufnahmebohrung 32 auf, welche sich von der Motorseite 10c des Hydraulikblocks 10 in Richtung zu einer von der Motorseite 10c weg gerichteten Gegenseite/Steuervorrichtungsseite 10d des Hydraulikblocks 10 erstreckt. (Die Motorseite 10c und die Gegenseite 10d erstrecken sich jeweils von der Pedalseite 10a zu der Rückseite 10d.) Die Plungeraufnahmebohrung 32 ist derart ausgebildet und mit dem mindestens einen Radanschluss 16 so verbunden, dass eine motorisierte Plungervorrichtung 34 des Bremssystems ausbildbar ist, mittels welcher bei dem Betrieb des Bremssystems durch Verstellen ihres mindestens einen Kolbens 36 in der Plungeraufnahmebohrung 32 der jeweilige Druck in dem mindestens einen Radbremszylinder 18 variierbar ist. Die motorisierte Plungervorrichtung 34 kann somit z.B. zum Ausführen einer autonomen Bremsung (durch autonomes Steigern des jeweiligen Drucks in dem mindestens einen Radbremszylinder 18 ohne eine Pedalbetätigung) und/oder zum Verblenden eines Generator-Bremsmoments beim Abbremsen des Kraftfahrzeugs mittels eines (nicht skizzierten) Generators (durch Anpassen des jeweiligen Drucks in dem mindestens einen Radbremszylinder 18 an das Generator-Bremsmoment) eingesetzt werden.

Das Verstellen des mindestens einen Kolbens 36 in der Plungeraufnahmebohrung 32 erfolgt mittels eines elektrischen Motors 38 der motorisierten Plungervorrichtung 34, welcher an der Motorseite 10c des Hydraulikblocks 10 angeordnet ist. Zusätzlich ist der Hydraulikblock 10 so ausgebildet, dass die sich von der Motorseite 10c zu der Gegenseite/Steuervorrichtungsseite 10d erstreckende Plungeraufnahmebohrung 32 den Hydraulikblock 10 vollständig durchdringt. Die Plungeraufnahmebohrung 32 bietet somit ein ausreichend großes Verstellvolumen für den mindestens einen Kolben 36 der motorisierten Plungervorrichtung 34 selbst wenn der elektrische Motor 38 (z.B. mittels mindestens einer Schraube 40) direkt an der Motorseite 10c befestigt ist. Der elektrische Motor 38 kann somit aufgrund der vorteilhaften Ausbildung der Plungeraufnahmebohrung 32 auf platzsparende Weise an dem Hydraulikblock 10 befestigt werden.

Der Hydraulikblock 10 ist deshalb trotz der Vielseitigkeit der an dem Bremssystem ausführbaren Funktionen ein One-Box-System mit einer hohen Integration von Bremssystemkomponenten. Insbesondere kann der Hydraulikblock 10 als bauraum- und kostenoptimiertes One-Box-System bezeichnet werden.

Als vorteilhafte Weiterbildung ist in dem Hydraulikblock 10 auch eine Simulatoraufnahmebohrung 42 ausgebildet, welche sich von einer Unterseite/Simulatorseite 10e des Hydraulikblocks 10 in Richtung zu einer von der Unterseite 10e weg gerichteten Oberseite/Reservoirseite 10f des Hydraulikblocks 10 erstreckt. (Die Unterseite 10e und die Oberseite 10f erstrecken sich jeweils von der Pedalseite 10a zu der Rückseite 10b und von der Motorseite 10c zu der Gegenseite 10d.) Die Simulatoraufnahmebohrung 42 ist derart ausgebildet und mit der Hauptbremszylinderaufnahmebohrung 12 so verbunden, dass ein Simulator 44 des Bremssystems zumindest teilweise in der Simulatoraufnahmebohrung 32 ausbildbar ist. Damit ist bei dem Betrieb des Bremssystems Bremsflüssigkeit mittels der (beispielsweise auf das Bremspedal 14 ausgeübten) Bremskraft in den Simulator 44 verschiebbar. Beispielsweise können ein Simulatorkolben 46, eine Simulatorfeder 48 und ein Federsitz 50 in die Simulatoraufnahmebohrung 42 einbringbar sein. Eine Öffnung der Simulatoraufnahmebohrung 42 an der Unterseite/Simulatorseite 10e des Hydraulikblocks 10 kann mittels einer Abdeckung 52 abdichtbar sein.

Bei dem Hydraulikblock 10 der Ausführungsform der Fig. 1a bis 1j erstreckt sich die Hauptbremszylinderaufnahmebohrung 12 entlang einer ersten Mittellängsachse 12a und die Plungeraufnahmebohrung 32 erstreckt sich entlang einer zweiten Mittellängsachse 32a senkrecht zu der ersten Mittellängsachse 12a von der Motorseite 10c zu der Gegenseite/Steuervorrichtungsseite 10d des Hydraulikblocks 10. Die Simulatoraufnahmebohrung 42 erstreckt sich entlang einer dritten Mittellängsachse 42a, welche senkrecht zu der zweiten Mittellängsachse 32a und der ersten Mittellängsachse 12a ausgelegt ist, von der Unterseite/Simulatorseite 10e in Richtung zu der Oberseite/Reservoirseite 10f. Der Simulator 44 ist deshalb auf platzsparende Weise in dem Hydraulikblock 10 integrierbar. Vorzugsweise verläuft die dritte Mittellängsachse 42a parallel zur Motorseite 10c und zur Gegenseite/Steuervorrichtungsseite 10d. Ein Hub des Simulatorkolbens 46 ist in diesem Fall parallel zur Motorseite 10c und zur Gegenseite/Steuervorrichtungsseite 10d.

Vorzugsweise ist die Gegenseite/Steuervorrichtungsseite 10d überfräßt, während die Motorseite 10c, die Unterseite/Simulatorseite 10e und/oder die Oberseite/Reservoirseite 10f nicht überfräßt sind. Ein Arbeitsaufwand zum Überfräsen mindestens einer der Seiten 10c, 10e und 10f entfällt somit.

Außerdem kann die Simulatoraufnahmebohrung 42 nur einen relativ kurzen Bereich des Hydraulikblocks 10 von der Unterseite/Simulatorseite 10e in Richtung zu der Oberseite/Reservoirseite 10f durchdringen. Unter der Simulatoraufnahmebohrung 42 ist deshalb vorzugsweise keine sich von der Unterseite/Simulatorseite 10e bis zu der Oberseite 10f erstreckende Bohrung zu verstehen. Somit verbleibt trotz der Ausstattung des Bremssystems mit dem Simulator 44 noch Anbringfläche an der Oberseite/Reservoirseite 10f zum Anordnen eines Bremsflüssigkeitsreservoirs 54 an der Oberseite 10f des Hydraulikblocks 10. Damit tritt kein Konflikt zu der üblicherweise an einer Spritzwand befindlichen Querverstrebung beim Ausbilden des Simulators 44 oder beim Anordnen des Bremsflüssigkeitsreservoirs 54 auf. Dies ist ein wesentlicher Packaging-Vorteil im Fahrzeugeinbauraum. An der Oberseite/Reservoirseite 10f des Hydraulikblocks 10 können auch Reservoiranschlüsse 56a bis 56c zum Anbinden des Bremsflüssigkeitsreservoirs 54 an verschiedene Bremssystemkomponenten und Bremsflüssigkeitspfade in dem Hydraulikblock 10 ausgebildet sein.

Ein erster Reservoiranschluss 56a zum Anbinden der motorisierten Plungervorrichtung 34 an das Bremsflüssigkeitsreservoir 54 kann senkrecht über der Plungeraufnahmebohrung 32 in der Oberseite/Reservoirseite 10f des Hydraulikblocks 10 ausgebildet sein. Der erste Reservoiranschluss 56a kann an seinem inneren Ende als Überdruckventil-Aufnahmebohrung 58 zum Anordnen eines Überdruckventils 60 zwischen der Plungeraufnahmebohrung 32 und dem Bremsflüssigkeitsreservoir 54 ausgebildet sein. (Fig. 1f zeigt einen schematischen Querschnitt eines mit dem ersten Reservoiranschluss 56a ausgebildeten Teils des Hydraulikblocks 10.) Eine Verlängerung der Überdruckventil-Aufnahmebohrung 58 kann in einer Tasche 61 münden, welche sich im Bereich der Plungeraufnahmebohrung 52 (speziell im Bereich einer Zuströmbohrung zum Flansch) befindet. Somit treten vergleichsweise geringe hydraulische Widerstände beim Nachladen/Nachschnüffeln der motorisierten Plungervorrichtung 34 auf. Ein zweiter Reservoiranschluss 56b kann auch Aufnahmevolumen für ein Rückschlagventil 62, über welches der Hauptbremszylinder 20 an das Bremsflüssigkeitsreservoir 54 angebunden ist, bieten. Da die Ventile 60 und 62 nicht elektrisch geschaltet werden, ist ihre Anordnung nahe an dem Bremsflüssigkeitsreservoir 54 (und damit getrennt von einer nachfolgend beschriebenen Steuervorrichtung 64 des Bremssystems) vorteilhaft.

Vorteilhafterweise ist in dem Hydraulikblock 10 mindestens eine Ventilaufnahmebohrung, welche sich jeweils von der Gegenseite/ Steuervorrichtungsseite 10d in Richtung zu der Motorseite 10c erstreckt, derart ausgebildet und mit dem mindestens einen Radanschluss 16, mit der Hauptbremszylinderaufnahmebohrung 12, mit der Plungeraufnahmebohrung 32 und/oder mit der Simulatoraufnahmebohrung 42 so verbunden, dass mindesten ein elektrisch ansteuerbares Ventil des Bremssystems in der mindestens einen Ventilaufnahmebohrung anordbar ist, welches bei dem Betrieb des Bremssystems mittels der an der Gegenseite/ Steuervorrichtungsseite 10d (z.B. mittels mindestens einer Schraube 66) angeordneten/befestigten Steuervorrichtung 64 des Bremssystems ansteuerbar ist. Die Steuervorrichtung 64 des Bremssystems kann insbesondere direkt an der Gegenseite/ Steuervorrichtungsseite 10d befestigt werden/sein. Da eine Ausbildung der motorisierten Plungervorrichtung 34 über die Gegenseite/Steuervorrichtungsseite 10d hinaus nicht notwendig ist, muss kein Zwischenraum zwischen der Steuervorrichtung 64 des Bremssystems und der Gegenseite 10d vorliegen. Außerdem muss bei der Ausbildung der Steuervorrichtung nicht auf das Freihalten eines Bauraums für einen an der Gegenseite/ Steuervorrichtungsseite 10d hervorstehenden Teil der motorisierten Plungervorrichtung 34 Rücksicht genommen werden.

Insbesondere sind bei dem hier beschriebenen Beispiel in der Gegenseite/ Steuervorrichtungsseite 10d vier Radauslassventil-Aufnahmebohrungen 68 und vier Radeinlassventil-Aufnahmebohrungen 70 (als die mindestens eine Ventilaufnahmebohrung) ausgebildet. In den vier Radauslassventil-Aufnahmebohrungen 68 sind vier Radauslassventile 72 des Bremssystems anordbar. Entsprechend sind in den vier Radeinlassventil-Aufnahmebohrungen 70 vier Radeinlassventile 74 des Bremssystems (mit je einem parallel dazu angeordneten Rückschlagventil 74a) einbringbar. (Die Radauslassventile 72 sind mittels der Steuervorrichtung 64 zum Ablassen von Druck aus den Radbremszylindern 18 in das Bremsflüssigkeitsreservoir 54 bei einer Radblockierung ansteuerbar. Die Radeinlassventile 74 können zum gesteuerten Befüllen der Radbremszylinder 18 von der Steuervorrichtung 64 angesteuert werden.)

Die vier Radauslassventil-Aufnahmebohrungen 68 sind nacheinander entlang einer ersten Reihe, welche sich in einer Richtung von einer an der Pedalseite 10a angrenzenden ersten Kante 10d-1 der Gegenseite/Steuervorrichtungsseite 10d zu einer an der Rückseite 10b angrenzenden zweiten Kante 10d-2 der Gegenseite 10d erstreckt, ausgebildet. Die vier Radeinlassventil-Aufnahmebohrungen 70 liegen nacheinander entlang einer zweiten Reihe, welche sich in der Richtung von der ersten Kante 10b-1 der Gegenseite/ Steuervorrichtungsseite 10d zu der zweiten Kante 10d-2 der Gegenseite 10d erstreckt. Die erste Reihe der vier Radauslassventil-Aufnahmebohrungen 68 ist näher an einer an der Oberseite/Reservoirseite 10f angrenzenden dritten Kante 10d-3 der Gegenseite/ Steuervorrichtungsseite 10d als die zweite Reihe der vier Radeinlassventil-Aufnahmebohrungen 70 ausgebildet. Die Hauptbremszylinderaufnahmebohrung 12 kann auf einer Höhe zwischen der ersten Reihe der vier Radauslassventil-Aufnahmebohrungen 68 und der zweiten Reihe der vier Radeinlassventil-Aufnahmebohrungen 70 liegen. Die Ausbildung der Hauptbremszylinderaufnahmebohrung 12 beeinträchtigt somit nicht eine mögliche Tiefe der Aufnahmebohrungen 68 und 70.

Optionalerweise kann noch eine Testventil-Aufnahmebohrung 76 in der ersten Reihe der Radauslassventil-Aufnahmebohrungen 68/zwischen den Radauslassventil-Aufnahmebohrungen 68 ausgebildet sein. In die Testventil-Aufnahmebohrung 76 kann ein Testventil 78 (parallel zu dem Rückschlagventil 62) zwischen der Hauptbremszylinderaufnahmebohrung 12 und dem Bremsflüssigkeitsreservoir 54 eingesetzt werden. Das Testventil kann zur Lufterkennung im Bereich des Hauptbremszylinders 20 vorteilhaft eingesetzt werden.

Vorzugsweise ist zusätzlich mindestens eine Drucksensor-Aufnahmeöffnung 80 in der Gegenseite/Steuervorrichtungsseite 10d derart ausgebildet, dass mindestens ein Drucksensor 82 des Bremssystems in der mindestens einen Drucksensor-Aufnahmeöffnung 80 anordbar ist, welcher jeweils bei dem Betrieb des Bremssystems mindestens ein Drucksignal an die Steuervorrichtung 64 ausgibt, wobei die mindestens eine Drucksensor-Aufnahmeöffnung 80 zwischen der ersten Reihe der vier Radauslassventil-Aufnahmebohrungen 68 und der zweiten Reihe der vier Radeinlassventil-Aufnahmebohrungen 70 ausgebildet ist. Damit kann die Tatsache, dass die mindestens eine Drucksensor-Aufnahmeöffnung 80 bereits bei einer geringen Tiefe ausreichend Platz für ihren jeweiligen Drucksensor 82 bietet, zur vorteilhaften Komprimierung der Öffnungen 12, 68, 70 und 80 genutzt werden. Die Ausbildung der mindestens einen Drucksensor-Aufnahmeöffnung 80 auf der Höhe der Hauptbremszylinderaufnahmebohrung 12, insbesondere auf Höhe der ersten Mittellängsachse 12a der Hauptbremszylinderaufnahmebohrung 12, beeinträchtigt damit eine Ausbildbarkeit der Öffnungen 12 und 80 kaum. Der Hydraulikblock 10 ist deshalb auch mit einer vergleichsweise geringen Dicke zwischen den Seiten 10c und 10d ausbildbar.

In der hier beschriebenen Ausführungsform ist in der Gegenseite/Steuervorrichtungsseite 10d zusätzlich eine Linearpositionssensor-Aufnahmeöffnung 84 derart ausgebildet, dass ein Linearpositionssensor 86 des Bremssystems in der Linearpositionssensor-Aufnahmeöffnung 84 anordbar ist, welcher bei dem Betrieb des Bremssystems mindestens ein Linearpositionssignal an die Steuervorrichtung 64 ausgibt, wobei die Linearpositionssensor-Aufnahmeöffnung 84 zwischen der ersten Reihe der vier Radauslassventil-Aufnahmebohrungen 68 und der dritten Kante 10d-3 der Gegenseite/ Steuervorrichtungsseite 10d ausgebildet ist. Der Linearpositionssensor 86, welcher ein vergleichsweise großes Volumen (im Vergleich zu den Radauslassventilen 72 oder den Radeinlassventilen 74) im Hydraulikblock 10 benötigt, ist somit ausreichend weit von den Bohrungen 12, 32 und 42 beabstandet, so dass eine Tiefe der Linearpositionssensor-Aufnahmeöffnung 84 eine Ausbildbarkeit der Öffnungen 12, 32 und 42 nicht beeinträchtigt. Außerdem ist auf diese Weise eine Anordnung des Linearpositionssensors 86 rechtwinkelig zu einer Führungsbohrung für eine Magnetnadel leicht realisierbar.

Vorteilhafterweise ist die Plungeraufnahmebohrung 32 auf der Gegenseite/ Steuervorrichtungsseite 10d zwischen der zweiten Reihe der vier Radeinlassventil-Aufnahmebohrungen 70 und einer an der Unterseite/Simulatorseite 10e des Hydraulikblocks 10 angrenzenden vierten Kante 10d-4 der Gegenseite/Steuervorrichtungsseite 10d ausgebildet. Die Ausbildung der Plungeraufnahmebohrung 32 beeinträchtigt somit eine Ausbildbarkeit der oben beschriebenen Öffnungen 12, 68, 70, 76, 80 und 84 nicht. Bevorzugt wird auch eine Ausbildung der Plungeraufnahmebohrung 32 näher an der Unterseite/Simulatorseite 10e als die Hauptbremszylinderaufnahmebohrung 12.

In der Gegenseite/Steuervorrichtungsseite 10d können zusätzlich eine erste Trennventil-Aufnahmeöffnung 88a und eine erste Plungerabkopplungsventil-Aufnahmeöffnung 90a (als die mindestens eine Ventilaufnahmebohrung) derart ausgebildet sein, dass ein erstes Trennventil 92a des Bremssystems in der ersten Trennventil-Aufnahmeöffnung 88a und ein erstes Plungerabkopplungsventil 94a des Bremssystems in der ersten Plungerabkopplungsventil-Aufnahmeöffnung 90a anordbar sind, wobei bei dem Betrieb des Bremssystems ein Bremsflüssigkeitspfad durch den Hydraulikblock 10 von der Hauptbremszylinderaufnahmebohrung 12 zu einer ersten Radeinlassventil-Aufnahmebohrung 70 und einer zweiten Radeinlassventil-Aufnahmebohrung 70
der vier Radeinlassventil-Aufnahmebohrungen 70 mittels des ersten Trennventils 92 schließbar ist und ein Bremsflüssigkeitspfad durch den Hydraulikblock 10 von der Plungeraufnahmebohrung 32 zu der ersten Radeinlassventil-Aufnahmebohrung 70 und der zweiten Radeinlassventil-Aufnahmebohrung 70 mittels des ersten Plungerabkopplungsventils 94 schließbar ist. Vorteilhafterweise sind die erste Trennventil-Aufnahmeöffnung 88a und die erste Plungerabkopplungsventil-Aufnahmeöffnung 90a zwischen der ersten Kante 10d-1 der Gegenseite/ Steuervorrichtungsseite 10d und der Plungeraufnahmebohrung 32 in der Gegenseite 10d ausgebildet. Bevorzugter Weise ist in diesem Fall die erste Plungerabkopplungsventil-Aufnahmeöffnung 90a (zum Entlüften mittels des ersten Plungerabkopplungsventils 94a) in einem kleineren Abstand zu der dritten Kante 10d-3 der Gegenseite/ Steuervorrichtungsseite 10d als die Plungeraufnahmebohrung 32 oder im gleichen Abstand zu der dritten Kante 10d-3 der Gegenseite 10d wie die Plungeraufnahmebohrung 32 ausgebildet.

Außerdem können in der Gegenseite/Steuervorrichtungsseite 10d zusätzlich eine zweite Trennventil-Aufnahmeöffnung 88b und eine zweite Plungerabkopplungsventil-Aufnahmeöffnung 90b (als die mindestens eine Ventilaufnahmebohrung) derart ausgebildet sein, dass ein zweites Trennventil 92b des Bremssystems in der zweiten Trennventil-Aufnahmeöffnung 88b und ein zweites Plungerabkopplungsventil 94b des Bremssystems in der zweiten Plungerabkopplungsventil-Aufnahmeöffnung 90b anordbar sind, wobei bei dem Betrieb des Bremssystems ein Bremsflüssigkeitspfad durch den Hydraulikblock 10 von der Hauptbremszylinderaufnahmebohrung 12 zu einer dritten Radeinlassventil-Aufnahmebohrung 70 und einer vierten Radeinlassventil-Aufnahmebohrung 70 der vier Radeinlassventil-Aufnahmebohrungen 70 mittels des zweiten Trennventils 92b schließbar ist und ein Bremsflüssigkeitspfad durch den Hydraulikblock 10 von der Plungeraufnahmebohrung 32 zu der dritten Radeinlassventil-Aufnahmebohrung 70 und der vierten Radeinlassventil-Aufnahmebohrung 70 mittels des zweiten Plungerabkopplungsventils 94b schließbar ist, und wobei die zweite Trennventil-Aufnahmeöffnung 88b und die zweite Plungerabkopplungsventil-Aufnahmeöffnung 90b zwischen der zweiten Kante 10d-2 der Gegenseite/Steuervorrichtungsseite 10d und der Plungeraufnahmebohrung 32 in der Gegenseite 10d ausgebildet sind. Auch in diesem Fall kann die zweite Plungerabkopplungsventil-Aufnahmeöffnung 90b (zum Entlüften mittels des zweiten Plungerabkopplungsventils 94a) in einem kleineren Abstand zu der dritten Kante 10d-3 der Gegenseite/Steuervorrichtungsseite 10d als die Plungeraufnahmebohrung 32 oder im gleichen Abstand zu der dritten Kante 10d-3 der Gegenseite 10d wie die Plungeraufnahmebohrung 32 ausgebildet sein.

Des Weiteren kann in der Gegenseite/Steuervorrichtungsseite 10d zusätzlich eine Simulatorventil-Aufnahmeöffnung 96 (als die mindestens eine Ventilaufnahmebohrung) derart ausgebildet sein, dass ein Simulatorventil 98 des Bremssystems (mit einem parallel dazu angeordneten Rückschlagventil 98a) in der Simulatorventil-Aufnahmeöffnung 96 anordbar ist, mittels welchen bei Betrieb des Bremssystems ein Bremsflüssigkeitspfad durch den Hydraulikblock 10 von der Hauptbremszylinderaufnahmebohrung 12 zu der Simulatoraufnahmebohrung 42 mittels des Simulatorventils 98 schließbar ist. Bevorzugter Weise ist die Simulatorventil-Aufnahmeöffnung zwischen der zweiten Kante 10d-2 der Gegenseite/Steuervorrichtungsseite 10d und der Plungeraufnahmebohrung 32 in der Gegenseite 10b ausgebildet. Das Simulatorventil 98 kann im gleichen Abstand zu der vierten Kante 10d-4 der Gegenseite/Steuervorrichtungsseite 10d wie das zweite Trennventil 92b oder in einem kleineren Abstand zu der vierten Kante 10d-4 der Gegenseite 10d als das zweite Trennventil 92b angeordnet werden.

In der hier beschriebenen Ausführungsform ist in der Gegenseite/ Steuervorrichtungsseite 10d auch eine Rotationssensor-Aufnahmeöffnung 100 derart ausgebildet, dass ein Rotationssensor 102 (für den elektrischen Motor 38 der motorisierten Plungervorrichtung 34) in der Rotationssensor-Aufnahmeöffnung 100 anordbar ist, welche bei dem Betrieb des Bremssystems mindestens ein Rotationspositionssignal an die Steuervorrichtung 64 ausgibt. In dem hier beschriebenen Hydraulikblock 10 ist die Rotationssensor-Aufnahmeöffnung 100 zwischen der vierten Kante 10d-4 der Gegenseite/Steuervorrichtungsseite 10b und der Plungeraufnahmebohrung 32 in der Gegenseite 10d ausgebildet. Der Rotationspositionssensor 102 ist somit leicht nahe an den elektrischen Motor 38 anordbar. Insbesondere ist der Rotationspositionssensor 102 konzentrisch zur Plungeraufnahmebohrung 32 anordbar.

Zwischen der vierten Kante 10d-4 der Gegenseite/Steuervorrichtungsseite 10d und der Plungeraufnahmebohrung 32 kann in der Gegenseite 10d auch noch mindestens eine Kontaktaufnahmeöffnung 104a-104c derart ausgebildet sein, dass mindestens ein Kontakt 106a-106c in der mindestens einen Kontaktaufnahmeöffnung 104a-104c anordbar ist, an welchem jeweils bei dem Betrieb des Bremssystems mittels der Steuervorrichtung 64 ein Spannungs- und/oder Stromsignal ausgebbar, anlegbar und/oder abgreifbar ist. (Pro Kontaktaufnahmeöffnung 104a-104c kann jeweils eine Phase 106a-106c eines elektrischen Kontakts 106a-106c eingesetzt werden.) Die Kontaktaufnahmeöffnungen 104a-104c sind insbesondere auf einer Teilkreisbahn mit einem Kreismittelpunkt im Zentrum der Plungeraufnahmebohrung 32 ausbildbar. Außerdem kann auch die Rotationssensor-Aufnahmeöffnung 100 auf der Teilkreisbahn mit den Kontaktaufnahmeöffnungen 104a-104c ausgebildet werden.

Als optionale Weiterbildung weist der Hydraulikblock 10 auch eine (mittels einer Abdeckung 107 verschließbare) Leckagebohrung 108 auf, welche in der Unterseite/Simulatorseite 10e ausgebildet ist. Vorzugsweise befindet sich die Leckagebohrung 108 in einem Bereich des Hydraulikblocks 10 zwischen der Plungeraufnahmebohrung 32 und der Unterseite/Simulatorseite 10e. Die Leckagebohrung 108 kann von der Unterseite/Simulatorseite 10e in Richtung zu der Plungeraufnahmebohrung 32 verlaufen. Da die Leckagebohrung 108 nur ein vergleichsweise geringes Volumen benötigt, beeinträchtigt sie eine Ausbildbarkeit der Bohrungen 32, 100 und 104a-104c nicht/kaum. Außerdem befindet sich die Leckagebohrung 108 im zum Erdmittelpunkt zugewandten Bereich des Hydraulikblocks 10, so dass ein verlässliches Sammeln eines (durch Leckage der motorisierten Plungervorrichtung 34) austretenden Bremsflüssigkeitsvolumens über die Gravitation sichergestellt ist.

Fig. 1e zeigt einen schematischen Querschnitt eines mit der Simulatorventil-Aufnahmeöffnung 96 ausgebildeten Teils des Hydraulikblocks 10. Gezeigt sind auch ein erster Abschnitt 110 und ein zweiter Abschnitt 112 eines von der Hauptbremszylinderaufnahmebohrung 12 zu der Simulatoraufnahmebohrung 42 verlaufenden Bremsflüssigkeitspfads, wobei der erste Abschnitt 110 zwischen der Hauptbremszylinderaufnahmebohrung 12 und der Simulatorventil-Aufnahmeöffnung 96 und der zweite Abschnitt 112 zwischen der Simulatorventil-Aufnahmeöffnung 96 und der Simulatoraufnahmebohrung 42 liegen. Wie in Fig. 1e erkennbar ist, ist ein an die Simulatorventil-Aufnahmeöffnung 96 angrenzender Teil des ersten Abschnitts 110 entlang einer um einen Winkel zwischen 10° und 80°, vorzugsweise um einen Winkel zwischen 25° und 75°, bevorzugter Weise um einen Winkel zwischen 35° und 65°, zu der Gegenseite/Steuervorrichtungsseite 10d geneigten Achse ausgebildet. (Im Vergleich dazu verläuft ein an die Simulatorventil-Aufnahmeöffnung 96 angrenzender Teil des zweiten Abschnitts 112 entlang einer im Wesentlichen zu der Gegenseite/ Steuervorrichtungsseite 10d parallelen Achse.) Durch die "schräge" Ausbildung des an die Simulatorventil-Aufnahmeöffnung 96 angrenzenden Teils des ersten Abschnitts 110 wird ein druckunterstütztes Schließen des Simulatorventils 98 verstärkt.

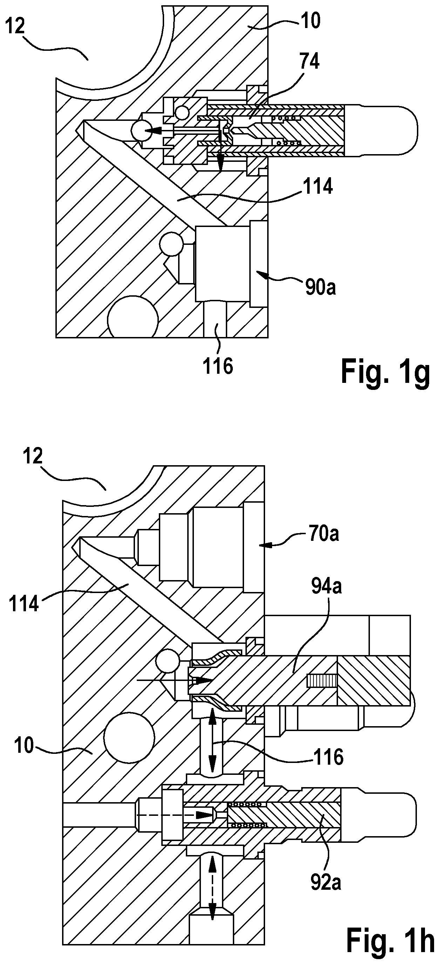

Fig. 1g und 1h zeigen schematische Querschnitte von Teilen des Hydraulikblocks 10 mit der Radeinlassventil-Aufnahmebohrungen 70 oder mit der ersten Trennventil-Aufnahmeöffnung 88a und der ersten Plungerabkopplungsventil-Aufnahmeöffnung 90a. Auch ein zwischen der Radeinlassventil-Aufnahmebohrungen 70 und der ersten Trennventil-Aufnahmeöffnung 88a verlaufender Bremsflüssigkeitspfad 114 kann entlang einer um einen Winkel zwischen 10° und 80°, vorzugsweise um einen Winkel zwischen 25° und 75°, bevorzugter Weise um einen Winkel zwischen 35° und 65°, zu der Gegenseite/Steuervorrichtungsseite 10d geneigten Achse ausgebildet sein. Dies verbessert ein Druckhalten mittels des jeweils eingesetzten Radeinlassventils 74 und ersten Trennventils 92a. Im Gegensatz wird für einen zwischen der ersten Trennventil-Aufnahmeöffnung 88a und der ersten Plungerabkopplungsventil-Aufnahmeöffnung 90a verlaufenden Bremsflüssigkeitspfad 116 eine Ausbildung entlang einer zu der Gegenseite/Steuervorrichtungsseite 10d (im Wesentlichen) parallelen Achse bevorzugt.

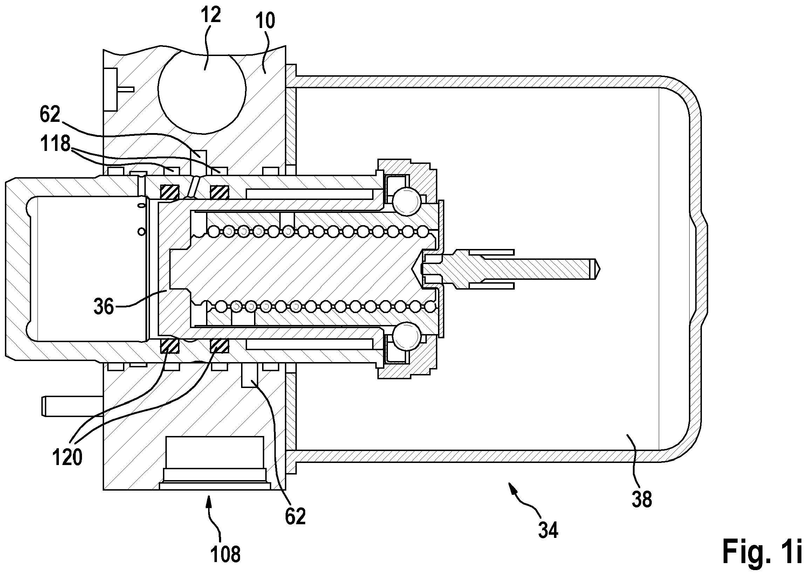

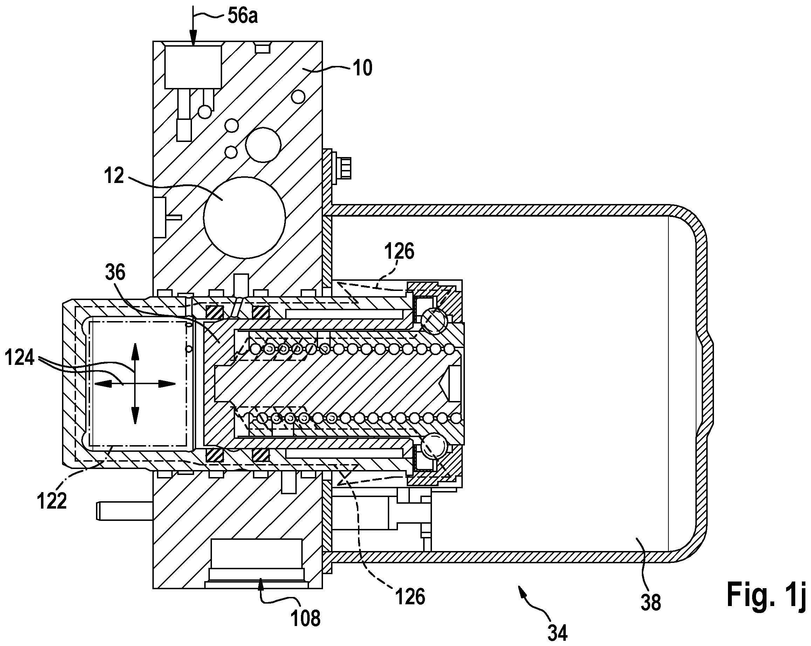

Fig. 1i und 1j zeigen schematische Teildarstellungen der motorisierten Plungervorrichtung 34, wobei auf eine Darstellung der einzelnen Komponenten des elektrischen Motors 38 und eines Gewindes, über welches der mindestens eine Kolben 36 an dem elektrischen Motor 38 angebunden ist, verzichtet ist.

An der Plungeraufnahmebohrung 32 sind radiale Einstiche 118 ausgebildet, über welche in dem Hydraulikblock 10 ausgebildete Bremsflüssigkeitspfade an die Plungeraufnahmebohrung 32 angebunden sind. Erkennbar sind auch die an der Plungeraufnahmebohrung 32 ausgebildeten Taschen 61, über welche die hydraulischen Abgänge im Flansch realisiert sind. Die Taschen 61 können auch als taschenförmige Einstiche, Hinterstiche, rotationsradiale Einstiche und/oder als seitliche Bohrungen im Flansch bezeichnet werden. Dichtringe/O-Ringe 120 sichern eine Abdichtung zwischen Flansch und Gehäuse. Alle Dichtringe/O-Ringe 120 können den gleichen Durchmesser haben. Bei einem gleichen Durchmesser aller Dichtringe/O-Ringe 120 tritt bei einer Druckerzeugung mittels der motorisierten Plungervorrichtung 34 keine Kraftrichtung auf. Kräfte müssen somit während der Druckerzeugung mittels der motorisierten Plungervorrichtung 34 nicht über externe Befestigungselemente, wie zum Beispiel Motorschrauben, abgestützt werden. Außerdem können in diesem Fall kostengünstigere und platzsparendere Elemente zum Ausbilden der motorisierten Plungervorrichtung 34 verwendet werden.

Die Linie 122 der Fig. 1j umgrenzt das variierbare Volumen der motorisierten Plungervorrichtung 34. Die Pfeile 124 zeigen die gleichmäßige Druckverteilung innerhalb des variierbaren Volumens bei der Druckerzeugung mittels der motorisierten Plungervorrichtung 34. Wie mittels der gestrichelten Linien 126 in der Fig. 1j wiedergegeben ist, tritt bei der Druckerzeugung mittels der motorisierten Plungervorrichtung 34 auch keine Kraftrichtung auf.

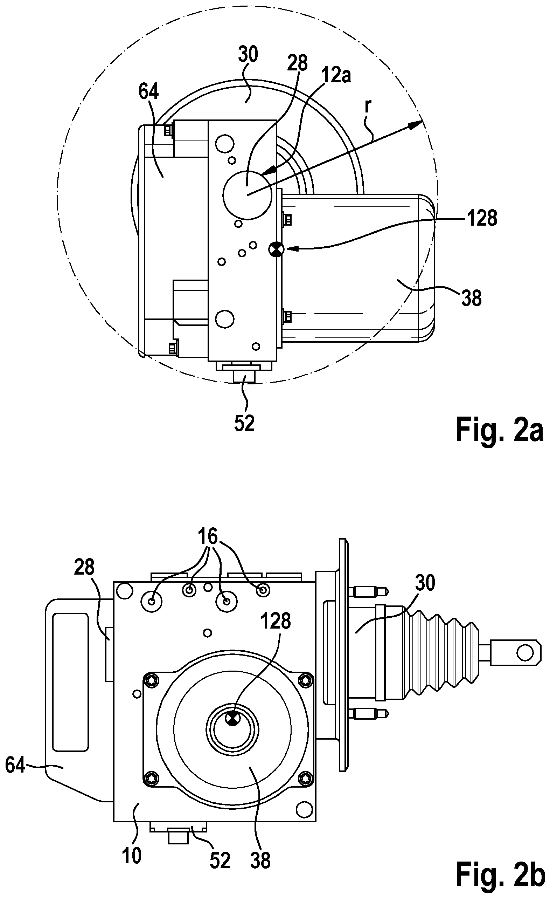

Fig. 2a und 2b zeigen schematische Gesamtdarstellungen einer zweiten Ausführungsform des Hydraulikblocks, bzw. des damit ausgestatteten Bremssystems.

Das in Fig. 2a und 2b wiedergegebene Bremssystem kann alle Merkmale der vorausgehend beschriebenen Ausführungsform haben. Auch das Bremssystem der Fig. 2a und 2b schafft damit alle Vorteile der oben beschriebenen Ausführungsform.

Auch bei dem Bremssystem der Fig. 2a und 2b ist eine Anordnung des elektrischen Motors 38 der motorisierten Plungervorrichtung 34 nahe an dem Hauptbremszylinder 20/der Hauptbremszylinderbohrung 10 realisiert. Aufgrund der flachen Schnittstellen des Hydraulikblocks 10 zum elektrischen Motor 38 und zu der Steuervorrichtung 64 ist die Anordnung des elektrischen Motors 38 und der Steuervorrichtung 64 an dem Hydraulikblock 10 vereinfacht. Nahezu alle Komponenten des Bremssystems sind innerhalb eines Radius r von höchstens 9 Inch (9^{∗}2,54 cm = 22,86 cm) um die erste Mittellängsachse 12a anordbar. Ein Schwerpunkt 128 (Center of Gravity) liegt so, dass ein verlässlicher Halt des an einer Spritzwand 11 montierten Bremssystems gewährleistet ist. Der Schwerpunkt 128 liegt auch nahe an dem Hauptbremszylinder 20. Auch der elektrische Motor 38 der motorisierten Plungervorrichtung 34 kann egozentrisch nahe an der Spritzwand 11 befestigt werden. Außerdem kann die Plungeraufnahmebohrung 32 näher an der Pedalseite 10a als an der Rückseite 10b ausgebildet sein. In diesem Fall liegt der elektrische Motor 38 näher am Bremspedal 14, was eine Stabilität des an der Spritzwand 11 montierten Bremssystems zusätzlich verbessert.

Die oben beschriebenen Hydraulikblöcke 10 können jeweils in einer vergleichsweise geringen Größe und mit einem relativ geringen Gewicht hergestellt werden. Außerdem können die oben beschriebenen Hydraulikblöcke 10 im Vergleich zum Stand der Technik mit einem reduzierten Materialeinsatz hergestellt werden.

## Patentansprüche

1. Hydraulikblock (10) für ein Bremssystem eines Kraftfahrzeugs mit:
mindestens einem an dem Hydraulikblock (10) ausgebildet Radanschluss (16), an welchem mindestens ein Radbremszylinder (18) des Bremssystems anbindbar ist;
einer in dem Hydraulikblock (10) ausgebildeten Hauptbremszylinderaufnahmebohrung (12), welche sich von einer Pedalseite (10a) des Hydraulikblocks (10) in Richtung zu einer von der Pedalseite (10a) weg gerichteten Rückseite (10b) des Hydraulikblocks (10) erstreckt, wobei die Hauptbremszylinderaufnahmebohrung (12) derart ausgebildet und mit dem mindestens einen Radanschluss (16) so verbunden ist, dass ein Hauptbremszylinder (20) des Bremssystems zumindest teilweise in der Hauptbremszylinderaufnahmebohrung (12) ausbildbar ist, mittels welchem bei einem Betrieb des Bremssystems ein jeweiliger Druck in dem mindestens einen Radbremszylinder (18) steigerbar ist; und
einer in dem Hydraulikblock (10) ausgebildeten Plungeraufnahmebohrung (32), welche sich von einer Motorseite (10c) des Hydraulikblocks (10) in Richtung zu einer von der Motorseite (10c) weg gerichteten Gegenseite (10d) des Hydraulikblocks erstreckt, wobei die Motorseite (10c) und die Gegenseite (10d) sich jeweils von der Pedalseite (10a) zu der Rückseite (10d) erstrecken, wobei die Plungeraufnahmebohrung (32) derart ausgebildet und mit dem mindestens einen Radanschluss (16) so verbunden ist, dass eine motorisierte Plungervorrichtung (34) des Bremssystems ausbildbar ist, mittels weicher bei dem Betrieb des Bremssystems durch Verstellens ihres mindestens einen Kolbens (36) in der Plungeraufnahmebohrung mittels ihres an der Motorseite (10c) angeordneten elektrischen Motors (38) der jeweilige Druck in dem mindestens einen Radbremszylinder (18) variierbar ist, und wobei die sich von der Motorseite (10c) zu der Gegenseite (10d) erstreckende Plungeraufnahmebohrung (32) den Hydraulikblock (10) vollständig durchdringt;
wobei der Hydraulikblock (10) als quaderförmiger Block ausgebildet ist,
wobei in dem Hydraulikblock (10) eine Simulatoraufnahmebohrung (42) ausgebildet ist, welche sich von einer Unterseite (10e) des Hydraulikblocks (10) in Richtung zu einer von der Unterseite (10e) weg gerichteten Oberseite (10f) des Hydraulikblocks (10) erstreckt, wobei die Unterseite (10e) und die Oberseite (10f) sich jeweils von der Pedalseite (10a) zu der Rückseite (10b) und von der Motorseite (10c) zu der Gegenseite (10d) erstrecken, und wobei die Simulatoraufnahmebohrung (42) derart ausgebildet und mit der Hauptbremszylinderaufnahmebohrung (12) so verbunden ist, dass ein Simulator (44) des Bremssystems zumindest teilweise in der Simulatoraufnahmebohrung (42) ausbildbar ist
und wobei in dem Hydraulikblock (10) mindestens eine Ventilaufnahmebohrung, welche sich jeweils von der Gegenseite (10d) in Richtung zu der Motorseite (10c) erstreckt, derart ausgebildet und mit dem mindestens einen Radanschluss (16), mit der Hauptbremszylinderaufnahmebohrung (12), mit der Plungeraufnahmebohrung (32) und/oder mit der Simulatoraufnahmebohrung (42) so verbunden ist, dass mindestens ein elektrisch ansteuerbares Ventil des Bremssystems in der mindestens einen Ventilaufnahmebohrung anordbar ist, welches bei dem Betrieb des Bremssystems mittels einer an der Gegenseite (10d) angeordneten Steuervorrichtung (64) des Bremssystems ansteuerbar ist,
**dadurch gekennzeichnet, dass**
in der Gegenseite (10d) zumindest vier Radauslassventil-Aufnahmebohrungen (68) und vier Radeinlassventil-Aufnahmebohrungen (70) als die mindestens eine Ventilaufnahmebohrung ausgebildet sind, wobei in den vier Radauslassventil-Aufnahmebohrungen (68) vier Radauslassventile (72) des Bremssystems und in den vier Radeinlassventil-Aufnahmebohrungen (70) vier Radeinlassventile (74) des Bremssystems anordbar sind, wobei die vier Radauslassventil-Aufnahmebohrungen (68) nacheinander entlang einer ersten Reihe liegen, welche sich in einer Richtung von einer an der Pedalseite (10a) angrenzenden ersten Kante (10d-1) der Gegenseite (10d) zu einer an der Rückseite (10b) angrenzenden zweiten Kante (10d-2) der Gegenseite (10d) erstreckt, und die vier Radeinlassventil-Aufnahmebohrungen (70) nacheinander entlang einer zweiten Reihe liegen, welche sich in der Richtung von der ersten Kante (10d-1) der Gegenseite (10d) zu der zweiten Kante (10d-2) der Gegenseite (10d) erstreckt, und wobei die erste Reihe der vier Radauslassventil-Aufnahmebohrungen (68) näher an einer an der Oberseite (10f) angrenzenden dritten Kante (10d-3) der Gegenseite (10d) als die zweite Reihe der vier Radeinlassventil-Aufnahmebohrungen (70) ausgebildet ist.

2. Hydraulikblock (10) nach Anspruch 1,
wobei die Hauptbremszylinderaufnahmebohrung (12) sich entlang einer ersten Mittellängsachse (12a) von der Pedalseite (10a) in Richtung zu der Rückseite (10b) erstreckt, die Plungeraufnahmebohrung (32) sich entlang einer zweiten Mittellängsachse (32a) senkrecht zu der ersten Mittellängsachse (12a) von der Motorseite (10c) zu der Gegenseite (10d) des Hydraulikblocks (10) erstreckt, und die Simulatoraufnahmebohrung (42) sich entlang einer dritten Mittellängsachse (42a) senkrecht zu der zweiten Mittellängsachse (32a) und der ersten Mittellängsachse (12a) von der Unterseite (10e) in Richtung zu der Oberseite (10f) erstreckt.

3. Hydraulikblock (10) nach einem der vorhergehenden Ansprüche, wobei in der Gegenseite (10d) zusätzlich eine Linearpositionssensor-Aufnahmeöffnung (84) derart ausgebildet ist, dass ein Linearpositionssensor (86) des Bremssystems in der Linearpositionssensor-Aufnahmeöffnung (84) anordbar ist, welcher bei dem Betrieb des Bremssystems mindestens ein Linearpositionssignal an die Steuervorrichtung (64) ausgibt, und wobei die Linearpositionssensor-Aufnahmeöffnung (84) zwischen der ersten Reihe der vier Radauslassventil-Aufnahmebohrungen (68) und der dritten Kante (10d-3) der Gegenseite (10d) ausgebildet ist.

4. Hydraulikblock (10) nach einem der vorhergehenden Ansprüche, wobei in der Gegenseite (10d) zusätzlich mindestens eine Drucksensor-Aufnahmeöffnung (80) derart ausgebildet ist, dass mindestens ein Drucksensor (82) des Bremssystems in der mindestens einen Drucksensor-Aufnahmeöffnung (80) anordbar ist, welcher jeweils bei dem Betrieb des Bremssystems mindestens ein Drucksignal an die Steuervorrichtung (64) ausgibt, und wobei die mindestens eine Drucksensor-Aufnahmeöffnung (80) zwischen der ersten Reihe der vier Radauslassventil-Aufnahmebohrungen (68) und der zweiten Reihe der vier Radeinlassventil-Aufnahmebohrungen (70) ausgebildet ist.

5. Hydraulikblock (10) nach einem der vorhergehenden Ansprüche, wobei die Plungeraufnahmebohrung (32) auf der Gegenseite (10d) zwischen der zweiten Reihe der vier Radeinlassventil-Aufnahmebohrungen (70) und einer an der Unterseite (10e) des Hydraulikblocks (10) angrenzenden vierten Kante (10d-4) der Gegenseite (10d) liegt.

6. Hydraulikblock (10) nach einem der vorhergehenden Ansprüche, wobei in der Gegenseite (10d) zusätzlich eine erste Trennventil-Aufnahmeöffnung (88a) und eine erste Plungerabkopplungsventil-Aufnahmeöffnung (90a) als die mindestens eine Ventilaufnahmebohrung derart ausgebildet sind, dass ein erstes Trennventil (92a) des Bremssystems in der ersten Trennventil-Aufnahmeöffnung (88a) und ein erstes Plungerabkopplungsventil (94a) des Bremssystems in der ersten Plungerabkopplungsventil-Aufnahmeöffnung (90a) anordbar sind, wobei bei dem Betrieb des Bremssystems ein Bremsflüssigkeitspfad durch den Hydraulikblock (10) von der Hauptbremszylinderaufnahmebohrung (12) zu einer ersten Radeinlassventil-Aufnahmebohrung (70) und einer zweiten Radeinlassventil-Aufnahmebohrung (70) der vier Radeinlassventil-Aufnahmebohrungen (70) mittels des ersten Trennventils (92a) schließbar ist und ein Bremsflüssigkeitspfad durch den Hydraulikblock (10) von der Plungeraufnahmebohrung (32) zu der ersten Radeinlassventil-Aufnahmebohrung (70) und der zweiten Radeinlassventil-Aufnahmebohrung (70) mittels des ersten Plungerabkopplungsventils (94a) schließbar ist, und wobei die erste Trennventil-Aufnahmeöffnung (88a) und die erste Plungerabkopplungsventil-Aufnahmeöffnung (90a) zwischen der ersten Kante (10d-1) der Gegenseite (10d) und der Plungeraufnahmebohrung (32) in der Gegenseite (10d) ausgebildet sind.

7. Hydraulikblock (10) nach einem der vorhergehenden Ansprüche, wobei in der Gegenseite (10d) zusätzlich eine zweite Trennventil-Aufnahmeöffnung (88b) und eine zweite Plungerabkopplungsventil-Aufnahmeöffnung (90b) als die mindestens eine Ventilaufnahmebohrung derart ausgebildet sind, dass ein zweites Trennventil (92b) des Bremssystems in der zweiten Trennventil-Aufnahmeöffnung (88b) und ein zweites Plungerabkopplungsventil (94b) des Bremssystems in der zweiten Plungerabkopplungsventil-Aufnahmeöffnung (90b) anordbar sind, wobei bei dem Betrieb des Bremssystems ein Bremsflüssigkeitspfad durch den Hydraulikblock (10) von der Hauptbremszylinderaufnahmebohrung (12) zu einer dritten Radeinlassventil-Aufnahmebohrung (70) und einer vierten Radeinlassventil-Aufnahmebohrung (70) der vier Radeinlassventil-Aufnahmebohrungen (70) mittels des zweiten Trennventils (92b) schließbar ist und ein Bremsflüssigkeitspfad durch den Hydraulikblock (10) von der Plungeraufnahmebohrung (32) zu der dritten Radeinlassventil-Aufnahmebohrung (70) und der vierten Radeinlassventil-Aufnahmebohrung (70) mittels des zweiten Plungerabkopplungsventils (94b) schließbar ist, und wobei die zweite Trennventil-Aufnahmeöffnung (92b) und die zweite Plungerabkopplungsventil-Aufnahmeöffnung (94b) zwischen der zweiten Kante (10d-2) der Gegenseite (10d) und der Plungeraufnahmebohrung (32) in der Gegenseite (10d)ausgebildet sind.

8. Hydraulikblock (10) nach einem der vorhergehenden Ansprüche, wobei in der Gegenseite (10d) zusätzlich eine Simulatorventil-Aufnahmeöffnung (96) als die mindestens eine Ventilaufnahmebohrung derart ausgebildet ist, dass ein Simulatorventil (98) des Bremssystems in der Simulatorventil-Aufnahmeöffnung (96) anordbar ist, wobei bei dem Betrieb des Bremssystems ein Bremsflüssigkeitspfad durch den Hydraulikblock (10) von der Hauptbremszylinderaufnahmebohrung (12) zu der Simulatoraufnahmebohrung (42) mittels des Simulatorventils (98) schließbar ist, und wobei die Simulatorventil-Aufnahmeöffnung (96) zwischen der zweiten Kante (10d-2) der Gegenseite (10d) und der Plungeraufnahmebohrung (32) in der Gegenseite (10d) ausgebildet ist.

9. Hydraulikblock (10) nach Anspruch 8,
wobei ein an die Simulatorventil-Aufnahmeöffnung (96) angrenzender Teil eines von der Hauptbremszylinderaufnahmebohrung (12) zu der Simulatorventil-Aufnahmeöffnung (96) verlaufender Abschnitt (110) des von der Hauptbremszylinderaufnahmebohrung (12) zu der Simulatoraufnahmebohrung (42) verlaufenden Bremsflüssigkeitspfads entlang einer um einen Winkel zwischen 10° und 80° zu der Gegenseite (10d) geneigten Achse verläuft.

10. Hydraulikblock (10) nach einem der vorhergehenden Ansprüche, wobei in der Gegenseite (10d) eine Rotationssensor-Aufnahmeöffnung (100) derart ausgebildet ist, dass ein Rotationssensor (102) des Bremssystems in der Rotationssensor-Aufnahmeöffnung (100) anordbar ist, welcher bei dem Betrieb des Bremssystems mindestens ein Rotationspositionssignal an die Steuervorrichtung (64) ausgibt, und wobei die Rotationssensor-Aufnahmeöffnung (100) zwischen der vierten Kante (10d-4) der Gegenseite (10d) und der Plungeraufnahmebohrung (32) in der Gegenseite (10d) ausgebildet ist.

11. Hydraulikblock (10) nach einem der vorhergehenden Ansprüche, wobei in der Gegenseite (10d) mindestens eine Kontaktaufnahmeöffnung (104a-104c) derart ausgebildet ist, dass mindestens ein Kontakt (106a- 106c) des Bremssystems in der mindestens einen Kontaktaufnahmeöffnung (104a- 104c) anordbar ist, an welchem jeweils bei dem Betrieb des Bremssystems mittels der Steuervorrichtung (64) ein Spannungs- und/oder Stromsignal ausgebbar, anlegbar und/oder abgreifbar ist, und wobei die mindestens eine Kontaktaufnahmeöffnung (104a- 104c) zwischen der vierten Kante (10d-4) der Gegenseite (10d) und der Plungeraufnahmebohrung (32) in der Gegenseite (10d) ausgebildet ist.

12. Hydraulikblock (10) nach einem der vorhergehenden Ansprüche, wobei die Gegenseite (10d) überfräßt ist, während die Motorseite (10c), die Unterseite (10e) und/oder die Oberseite (10f) nicht überfräßt sind.

13. Bremssystem für ein Kraftfahrzeug mit einem Hydraulikblock nach einem der vorhergehenden Ansprüche.

## Claims

1. Hydraulic block (10) for a brake system of a motor vehicle, comprising:
at least one wheel port (16) which is formed on the hydraulic block (10) and to which at least one wheel brake cylinder (18) of the brake system can be connected;
a brake master cylinder receiving bore (12) which is formed in the hydraulic block (10) and extends from a pedal side (10a) of the hydraulic block (10) in the direction of a rear side (10b) of the hydraulic block (10), said rear side being directed away from the pedal side (10a), wherein the brake master cylinder receiving bore (12) is designed in such a manner and connected to the at least one wheel port (16) in such a way that a brake master cylinder (20) of the brake system can be at least partially formed in the brake master cylinder receiving bore (12), by means of which brake master cylinder a respective pressure in the at least one wheel brake cylinder (18) can be increased during operation of the brake system; and
a plunger receiving bore (32) which is formed in the hydraulic block (10) and extends from an engine side (10c) of the hydraulic block (10) in the direction of an opposite side (10d) of the hydraulic block, said opposite side being directed away from the engine side (10c), wherein the engine side (10c) and the opposite side (10d) each extend from the pedal side (10a) to the rear side (10d), wherein the plunger receiving bore (32) is designed in such a manner and connected to the at least one wheel port (16) in such a way that a motorized plunger device (34) of the brake system can be formed, by means of which plunger device the respective pressure in the at least one wheel brake cylinder (18) can be varied by adjustment of the at least one piston (36) of said plunger device in the plunger receiving bore by means of the electric motor (38) of said plunger device, said electric motor being arranged on the engine side (10c) during operation of the brake system, and wherein the plunger receiving bore (32) extending from the engine side (10c) to the opposite side (10d) completely penetrates the hydraulic block (10) ;
wherein the hydraulic block (10) is designed as a cuboid block;
wherein a simulator receiving bore (42) is formed in the hydraulic block (10), said simulator receiving bore extending from a lower side (10e) of the hydraulic block (10) in the direction of an upper side (10f) of the hydraulic block (10), said upper side being directed away from the lower side (10e), wherein the lower side (10e) and the upper side (10f) each extend from the pedal side (10a) to the rear side (10b) and from the engine side (10c) to the opposite side (10d), and wherein the simulator receiving bore (42) is designed in such a manner and connected to the brake master cylinder receiving bore (12) in such a way that a simulator (44) of the brake system can be at least partially formed in the simulator receiving bore (42),
and wherein at least one valve receiving bore which extends in each case from the opposite side (10d) in the direction of the engine side (10c) is formed in the hydraulic block (10) in such a manner and connected to the at least one wheel port (16), to the brake master cylinder receiving bore (12), to the plunger receiving bore (32) and/or to the simulator receiving bore (42) in such a way that at least one electrically activatable valve of the brake system can be arranged in the at least one valve receiving bore, said valve being able to be activated by means of a control device (64) of the brake system, which control device is arranged on the opposite side (10d), during operation of the brake system,
**characterized in that**
at least four wheel outlet valve receiving bores (68) and four wheel inlet valve receiving bores (70) are formed as the at least one valve receiving bore in the opposite side (10d), wherein four wheel outlet valves (72) of the brake system can be arranged in the four wheel outlet valve receiving bores (68) and four wheel inlet valves (74) of the brake system can be arranged in the four wheel inlet valve receiving bores (70), wherein the four wheel outlet valve receiving bores (68) lie one after another along a first row which extends in a direction from a first edge (10d-1) of the opposite side (10d) adjacent to the pedal side (10a) to a second edge (10d-2) of the opposite side (10d) adjacent to the rear side (10b), and the four wheel inlet valve receiving bores (70) lie one after another along a second row which extends in the direction from the first edge (10d-1) of the opposite side (10d) to the second edge (10d-2) of the opposite side (10d), and wherein the first row of the four wheel outlet valve receiving bores (68) is formed closer to a third edge (10d-3) of the opposite side (10d) adjacent to the upper side (10f) than the second row of the four wheel inlet valve receiving bores (70).

2. Hydraulic block (10) according to Claim 1,
wherein the brake master cylinder receiving bore (12) extends along a first centre longitudinal axis (12a) from the pedal side (10a) in the direction of the rear side (10b), the plunger receiving bore (32) extends along a second centre longitudinal axis (32a) perpendicularly to the first centre longitudinal axis (12a) from the engine side (10c) to the opposite side (10d) of the hydraulic block (10), and the simulator receiving bore (42) extends along a third centre longitudinal axis (42a) perpendicularly to the second centre longitudinal axis (32a) and to the first centre longitudinal axis (12a) from the lower side (10e) in the direction of the upper side (10f).

3. Hydraulic block (10) according to one of the preceding claims,
wherein a linear position sensor receiving opening (84) is additionally formed in the opposite side (10d) in such a manner that a linear position sensor (86) of the brake system can be arranged in the linear position sensor receiving opening (84), which linear position sensor outputs at least one linear position signal to the control device (64) during operation of the brake system, and wherein the linear position sensor receiving opening (84) is formed between the first row of the four wheel outlet valve receiving bores (68) and the third edge (10d-3) of the opposite side (10d).

4. Hydraulic block (10) according to one of the preceding claims, wherein at least one pressure sensor receiving opening (80) is additionally formed in the opposite side (10d) in such a manner that at least one pressure sensor (82) of the brake system can be arranged in the at least one pressure sensor receiving opening (80), which pressure sensor in each case outputs at least one pressure signal to the control device (64) during operation of the brake system, and wherein the at least one pressure sensor receiving opening (80) is formed between the first row of the four wheel outlet valve receiving bores (68) and the second row of the four wheel inlet valve receiving bores (70).

5. Hydraulic block (10) according to one of the preceding claims,
wherein the plunger receiving bore (32) is situated on the opposite side (10d) between the second row of the four wheel inlet valve receiving bores (70) and a fourth edge (10d-4) of the opposite side (10d) adjacent to the lower side (10e) of the hydraulic block (10).

6. Hydraulic block (10) according to one of the preceding claims,
wherein a first separating valve receiving opening (88a) and a first plunger decoupling valve receiving opening (90a) are additionally formed as the at least one valve receiving bore in the opposite side (10d) in such a manner that a first separating valve (92a) of the brake system can be arranged in the first separating valve receiving opening (88a) and a first plunger decoupling valve (94a) of the brake system can be arranged in the first plunger decoupling valve receiving opening (90a), wherein, during operation of the brake system, a brake fluid path through the hydraulic block (10) from the brake master cylinder receiving bore (12) to a first wheel inlet valve receiving bore (70) and to a second wheel inlet valve receiving bore (70) of the four wheel inlet valve receiving bores (70) can be closed by means of the first separating valve (92a) and a brake fluid path through the hydraulic block (10) from the plunger receiving bore (32) to the first wheel inlet valve receiving bore (70) and to the second wheel inlet valve receiving bore (70) can be closed by means of the first plunger decoupling valve (94a), and wherein the first separating valve receiving opening (88a) and the first plunger decoupling valve receiving opening (90a) are formed between the first edge (10d-1) of the opposite side (10d) and the plunger receiving bore (32) in the opposite side (10d).

7. Hydraulic block (10) according to one of the preceding claims,
wherein a second separating valve receiving opening (88b) and a second plunger decoupling valve receiving opening (90b) are additionally formed as the at least one valve receiving bore in the opposite side (10d) in such a manner that a second separating valve (92b) of the brake system can be arranged in the second separating valve receiving opening (88b) and a second plunger decoupling valve (94b) of the brake system can be arranged in the second plunger decoupling valve receiving opening (90b), wherein, during operation of the brake system, a brake fluid path through the hydraulic block (10) from the brake master cylinder receiving bore (12) to a third wheel inlet valve receiving bore (70) and to a fourth wheel inlet valve receiving bore (70) of the four wheel inlet valve receiving bores (70) can be closed by means of the second separating valve (92b) and a brake fluid path through the hydraulic block (10) from the plunger receiving bore (32) to the third wheel inlet valve receiving bore (70) and to the fourth wheel inlet valve receiving bore (70) can be closed by means of the second plunger decoupling valve (94b), and wherein the second separating valve receiving opening (92b) and the second plunger decoupling valve receiving opening (94b) are formed between the second edge (10d-2) of the opposite side (10d) and the plunger receiving bore (32) in the opposite side (10d) .

8. Hydraulic block (10) according to one of the preceding claims,
wherein a simulator valve receiving opening (96) is additionally formed as the at least one valve receiving bore in the opposite side (10d) in such a manner that a simulator valve (98) of the brake system can be arranged in the simulator valve receiving opening (96), wherein, during operation of the brake system, a brake fluid path through the hydraulic block (10) from the brake master cylinder receiving bore (12) to the simulator receiving bore (42) can be closed by means of the simulator valve (98), and wherein the simulator valve receiving opening (96) is formed between the second edge (10d-2) of the opposite side (10d) and the plunger receiving bore (32) in the opposite side (10d).

9. Hydraulic block (10) according to Claim 8,
wherein a part, adjacent to the simulator valve receiving opening (96), of a portion (110), running from the brake master cylinder receiving bore (12) to the simulator valve receiving opening (96), of the brake fluid path running from the brake master cylinder receiving bore (12) to the simulator receiving bore (42) runs along an axis inclined by an angle of between 10° and 80° to the opposite side (10d) .

10. Hydraulic block (10) according to one of the preceding claims,
wherein a rotation sensor receiving opening (100) is formed in the opposite side (10d) in such a manner that a rotation sensor (102) of the brake system can be arranged in the rotation sensor receiving opening (100), which rotation sensor outputs at least one rotation position signal to the control device (64) during operation of the brake system, and wherein the rotation sensor receiving opening (100) is formed between the fourth edge (10d-4) of the opposite side (10d) and the plunger receiving bore (32) in the opposite side (10d).

11. Hydraulic block (10) according to one of the preceding claims,
wherein at least one contact receiving opening (104a-104c) is formed in the opposite side (10d) in such a manner that at least one contact (106a-106c) of the brake system can be arranged in the at least one contact receiving opening (104a-104c), at which in each case a voltage and/or current signal can be output, can be applied and/or can be tapped off by means of the control device (64) during operation of the brake system, and wherein the at least one contact receiving opening (104a-104c) is formed. between the fourth edge (10d-4) of the opposite side (10d) and the plunger receiving bore (32) in the opposite side (10d).

12. Hydraulic block (10) according to one of the preceding claims,
wherein the opposite side (10d) is milled over, while the engine side (10c), the lower side (10e) and/or the upper side (10f) are not milled over.

13. Brake system for a motor vehicle with a hydraulic block according to one of the preceding claims.

## Revendications

1. Bloc hydraulique (10) pour un système de freinage d'un véhicule automobile, comprenant :
au moins un raccord de roue (16) réalisé au niveau du bloc hydraulique (10), auquel peut être raccordé au moins un cylindre de frein de roue (18) du système de freinage ;
un alésage de réception de cylindre de frein principal (12) réalisé dans le bloc hydraulique (10), qui s'étend depuis un côté pédale (10a) du bloc hydraulique (10) dans la direction d'un côté arrière (10b) du bloc hydraulique (10) orienté à l'écart du côté pédale (10a), l'alésage de réception de cylindre de frein principal (12) étant réalisé et étant connecté à l'au moins un raccord de roue (16) de telle sorte qu'un cylindre de frein principal (20) du système de freinage puisse être réalisé au moins en partie dans l'alésage de réception de cylindre de frein principal (12), au moyen duquel, pendant le fonctionnement du système de freinage, une pression respective dans l'au moins un cylindre de frein de roue (18) peut être augmentée ; et
un alésage de réception de plongeur (32) réalisé dans le bloc hydraulique (10), qui s'étend depuis un côté moteur (10c) du bloc hydraulique (10) dans la direction d'un côté opposé (10d) du bloc hydraulique orienté à l'écart du côté moteur (10c), le côté moteur (10c) et le côté opposé (10d) s'étendant à chaque fois du côté pédale (10a) au côté arrière (10d), l'alésage de réception de plongeur (32) étant réalisé et étant connecté à l'au moins un raccord de roue (16) de telle sorte qu'un dispositif de plongeur motorisé (34) du système de freinage puisse être réalisé, au moyen duquel, pendant le fonctionnement du système de freinage, par réglage de son au moins un piston (36) dans l'alésage de réception de plongeur au moyen de son moteur électrique (38) disposé au niveau du côté moteur (10c), la pression respective dans l'au moins un cylindre de frein de roue (18) peut être variée, et l'alésage de réception de plongeur (32) s'étendant depuis le côté moteur (10c) jusqu'au côté opposé (10d) traversant complètement le bloc hydraulique (10) ;
le bloc hydraulique (10) étant réalisé sous forme de bloc parallélépipédique,
un alésage de réception de simulateur (42) étant réalisé dans le bloc hydraulique (10), lequel s'étend depuis un côté inférieur (10e) du bloc hydraulique (10) dans la direction d'un côté supérieur (10f) du bloc hydraulique (10) orienté à l'écart du côté inférieur (10e), le côté inférieur (10e) et le côté supérieur (10f) s'étendant chacun du côté pédale (10a) au côté arrière (10b) et du côté moteur (10c) au côté opposé (10d), et l'alésage de réception de simulateur (42) étant réalisé et étant connecté à l'alésage de réception de cylindre de frein principal (12) de telle sorte qu'un simulateur (44) du système de freinage puisse être réalisé au moins en partie dans l'alésage de réception de simulateur (42), et, dans le bloc hydraulique (10), au moins un alésage de réception de soupape qui s'étend à chaque fois depuis le côté opposé (10d) dans la direction du côté moteur (10c) étant réalisé et étant connecté à l'au moins un raccord de roue (16), à l'alésage de réception de cylindre de frein principal (12), à l'alésage de réception de plongeur (32) et/ou à l'alésage de réception de simulateur (42) de telle sorte qu'au moins une soupape du système de freinage pouvant être commandée de manière électrique puisse être disposée dans l'au moins un alésage de réception de soupape, laquelle, pendant le fonctionnement du système de freinage, peut être pilotée au moyen d'un dispositif de commande (64) du système de freinage disposé au niveau du côté opposé (10d),
**caractérisé en ce que**
dans le côté opposé (10d) au moins quatre alésages de réception de soupape de sortie de roue (68) et quatre alésages de réception de soupape d'entrée de roue (70) sont réalisés en tant que l'au moins un alésage de réception de soupape, quatre soupapes de sortie de roue (72) du système de freinage pouvant être disposées dans les quatre alésages de réception de soupape de sortie de roue (68) et quatre soupapes d'entrée de roue (74) du système de freinage pouvant être disposées dans les quatre alésages de réception de soupape d'entrée de roue (70), les quatre alésages de réception de soupape de sortie de roue (68) étant situés les uns derrière les autres le long d'une première rangée qui s'étend dans une direction allant d'un premier bord (10d-1) du côté opposé (10d) adjacent au côté pédale (10a) jusqu'à un deuxième bord (10d-2) du côté opposé (10d) adjacent au côté arrière (10b), et les quatre alésages de réception de soupape d'entrée de roue (70) étant situés les uns derrière les autres le long d'une deuxième rangée qui s'étend dans la direction allant du premier bord (10d-1) du côté opposé (10d) jusqu'au deuxième bord (10d-2) du côté opposé (10d), et la première rangée des quatre alésages de réception de soupape de sortie de roue (68) étant réalisée plus près d'un troisième bord (10d-3) du côté opposé (10d) adjacent au côté supérieur (10f) que la deuxième rangée des quatre alésages de réception de soupape d'entrée de roue (70).

2. Bloc hydraulique (10) selon la revendication 1, dans lequel l'alésage de réception de cylindre de frein principal (12) s'étend le long d'un premier axe longitudinal médian (12a) depuis le côté pédale (10a) dans la direction du côté arrière (10b), l'alésage de réception de plongeur (32) s'étend le long d'un deuxième axe longitudinal médian (32a) perpendiculairement au premier axe longitudinal médian (12a) depuis le côté moteur (10c) jusqu'au côté opposé (10d) du bloc hydraulique (10), et
l'alésage de réception de simulateur (42) s'étend le long d'un troisième axe longitudinal médian (42a) perpendiculairement au deuxième axe longitudinal médian (32a) et au premier axe longitudinal médian (12a) depuis le côté inférieur (10e) dans la direction du côté supérieur (10f).

3. Bloc hydraulique (10) selon l'une quelconque des revendications précédentes, dans lequel une ouverture de réception de capteur de position linéaire (84) est en outre réalisée dans le côté opposé (10d), de telle sorte qu'un capteur de position linéaire (86) du système de freinage puisse être disposé dans l'ouverture de réception de capteur de position linéaire (84), lequel, pendant le fonctionnement du système de freinage, fournit au moins un signal de position linéaire au dispositif de commande (64), et dans lequel l'ouverture de réception de capteur de position linéaire (84) est réalisée entre la première rangée des quatre alésages de réception de soupape de sortie de roue (68) et le troisième bord (10d-3) du côté opposé (10d).

4. Bloc hydraulique (10) selon l'une quelconque des revendications précédentes, dans lequel au moins une ouverture de réception de capteur de pression (80) est en outre réalisée dans le côté opposé (10d), de telle sorte qu'au moins un capteur de pression (82) du système de freinage puisse être disposé dans l'au moins une ouverture de réception de capteur de pression (80), lequel fournit, à chaque fois pendant le fonctionnement du système de freinage, au moins un signal de pression au dispositif de commande (64), et dans lequel l'au moins une ouverture de réception de capteur de pression (80) est réalisée entre la première rangée des quatre alésages de réception de soupape de sortie de roue (68) et la deuxième rangée des quatre alésages de réception de soupape d'entrée de roue (70).

5. Bloc hydraulique (10) selon l'une quelconque des revendications précédentes, dans lequel l'alésage de réception de plongeur (32) est situé sur le côté opposé (10d) entre la deuxième rangée des quatre alésages de réception de soupape d'entrée de roue (70) et un quatrième bord (10d-4) du côté opposé (10d) adjacent au côté inférieur (10e) du bloc hydraulique (10).

6. Bloc hydraulique (10) selon l'une quelconque des revendications précédentes, dans lequel une première ouverture de réception de soupape de séparation (88a) et une première ouverture de réception de soupape de désaccouplement de plongeur (90a) en tant que l'au moins un alésage de réception de soupape sont réalisées en outre dans le côté opposé (10d), de telle sorte qu'une première soupape de séparation (92a) du système de freinage puisse être disposée dans la première ouverture de réception de soupape de séparation (88a) et qu'une première soupape de désaccouplement de plongeur (94a) du système de freinage puisse être disposée dans la première ouverture de réception de soupape de désaccouplement de plongeur (90a), un chemin de liquide de frein passant par le bloc hydraulique (10) pendant le fonctionnement du système de freinage depuis l'alésage de réception de cylindre de frein principal (12) jusqu'à un premier alésage de réception de soupape d'entrée de roue (70) et un deuxième alésage de réception de soupape d'entrée de roue (70) des quatre alésages de réception de soupape d'entrée de roue (70) pouvant être fermé au moyen de la première soupape de séparation (92a) et un chemin de liquide de frein passant par le bloc hydraulique (10) depuis l'alésage de réception de plongeur (32) jusqu'au premier alésage de réception de soupape d'entrée de roue (70) et au deuxième alésage de réception de soupape d'entrée de roue (70) pouvant être fermé au moyen de la première soupape de désaccouplement de plongeur (94a), et la première ouverture de réception de soupape de séparation (88a) et la première ouverture de réception de soupape de désaccouplement de plongeur (90a) étant réalisées entre le premier bord (10d-1) du côté opposé (10d) et l'alésage de réception de plongeur (32) dans le côté opposé (10d).

7. Bloc hydraulique (10) selon l'une quelconque des revendications précédentes, dans lequel une deuxième ouverture de réception de soupape de séparation (88b) et une deuxième ouverture de réception de soupape de désaccouplement de plongeur (90b) sont en outre réalisées en tant que l'au moins un alésage de réception de soupape dans le côté opposé (10d) de telle sorte qu'une deuxième soupape de séparation (92b) du système de freinage puisse être disposée dans la deuxième ouverture de réception de soupape de séparation (88b) et qu'une deuxième soupape de désaccouplement de plongeur (94b) du système de freinage puisse être disposée dans la deuxième ouverture de réception de soupape de désaccouplement de plongeur (90b), un chemin de liquide de frein passant par le bloc hydraulique (10) pendant le fonctionnement du système de freinage depuis l'alésage de réception de cylindre de frein principal (12) jusqu'à un troisième alésage de réception de soupape d'entrée de roue (70) et un quatrième alésage de réception de soupape d'entrée de roue (70) des quatre alésages de réception de soupape d'entrée de roue (70) pouvant être fermé au moyen de la deuxième soupape de séparation (92b) et un chemin de liquide de frein passant par le bloc hydraulique (10) depuis l'alésage de réception de plongeur (32) jusqu'au troisième alésage de réception de soupape d'entrée de roue (70) et au quatrième alésage de réception de soupape d'entrée de roue (70) pouvant être fermé au moyen de la deuxième soupape de désaccouplement de plongeur (94b), et la deuxième ouverture de réception de soupape de séparation (92b) et la deuxième ouverture de réception de soupape de désaccouplement de plongeur (94b) étant réalisées entre le deuxième bord (10d-2) du côté opposé (10d) et l'alésage de réception de plongeur (32) dans le côté opposé (10d).

8. Bloc hydraulique (10) selon l'une quelconque des revendications précédentes, dans lequel une ouverture de réception de soupape de simulateur (96) est en outre réalisée en tant que l'au moins un alésage de réception de soupape dans le côté opposé (10d), de telle sorte qu'une soupape de simulateur (98) du système de freinage puisse être disposée dans l'ouverture de réception de soupape de simulateur (96), un chemin de liquide de frein passant par le bloc hydraulique (10) pendant le fonctionnement du système de freinage depuis l'alésage de réception de cylindre de frein principal (12) jusqu'à l'alésage de réception de simulateur (42) pouvant être fermé au moyen de la soupape de simulateur (98), et l'ouverture de réception de soupape de simulateur (96) étant réalisée entre le deuxième bord (10d-2) du côté opposé (10d) et l'alésage de réception de plongeur (32) dans le côté opposé (10d).

9. Bloc hydraulique (10) selon la revendication 8, dans lequel une partie adjacente à l'ouverture de réception de soupape de simulateur (96) d'une portion (110) s'étendant depuis l'alésage de réception de cylindre de frein principal (12) jusqu'à l'ouverture de réception de soupape de simulateur (96) du chemin de liquide de frein s'étendant depuis l'alésage de réception de cylindre de frein principal (12) jusqu'à l'alésage de réception de simulateur (42) s'étend le long d'un axe incliné suivant un angle compris entre 10° et 80° par rapport au côté opposé (10d).

10. Bloc hydraulique (10) selon l'une quelconque des revendications précédentes, dans lequel une ouverture de réception de capteur de rotation (100) est réalisée dans le côté opposé (10d) de telle sorte qu'un capteur de rotation (102) du système de freinage puisse être disposé dans l'ouverture de réception de capteur de rotation (100), lequel, pendant le fonctionnement du système de freinage, envoie au moins un signal de position de rotation au dispositif de commande (64), et dans lequel l'ouverture de réception de capteur de rotation (100) est réalisée entre le quatrième bord (10d-4) du côté opposé (10d) et l'alésage de réception de plongeur (32) dans le côté opposé (10d).

11. Bloc hydraulique (10) selon l'une quelconque des revendications précédentes, dans lequel au moins une ouverture de réception de contact (104a-104c) est réalisée dans le côté opposé (10d) de telle sorte qu'au moins un contact (106a-106c) du système de freinage puisse être disposé dans l'au moins une ouverture de réception de contact (104a-104c), au niveau duquel à chaque fois pendant le fonctionnement du système de freinage, un signal de tension et/ou de courant peut être émis, appliqué et/ou prélevé au moyen du dispositif de commande (64), et dans lequel l'au moins une ouverture de réception de contact (104a-104c) est réalisée entre le quatrième bord (10d-4) du côté opposé (10d) et l'alésage de réception de plongeur (32) dans le côté opposé (10d).

12. Bloc hydraulique (10) selon l'une quelconque des revendications précédentes, dans lequel le côté opposé (10d) est refraisé, tandis que le côté moteur (10c), le côté inférieur (10e) et/ou le côté supérieur (10f) ne sont pas refraisés.

13. Système de freinage pour un véhicule automobile comprenant un bloc hydraulique selon l'une quelconque des revendications précédentes.
